(19) Europäisches Patentamt / European Patent Office / Office européen des brevets

(11) **EP 3 543 648 B1**

(12) **EUROPÄISCHE PATENTSCHRIFT**

(45) Veröffentlichungstag und Bekanntmachung des Hinweises auf die Patenterteilung:
**03.05.2023   Patentblatt 2023/18**

(21) Anmeldenummer: **18163203.5**

(22) Anmeldetag: **21.03.2018**

(51) Internationale Patentklassifikation (IPC):
*G01C 15/00* (2006.01)     *G01S 17/66* (2006.01)
*G01S 17/88* (2006.01)     *G01S 7/486* (2020.01)
*G01S 7/481* (2006.01)     *G01S 7/484* (2006.01)
*G01S 7/487* (2006.01)     *G01S 17/10* (2020.01)
*G01S 17/42* (2006.01)     *G01S 17/87* (2020.01)

(52) Gemeinsame Patentklassifikation (CPC):
**G01C 15/002; G01S 7/484; G01S 7/4868; G01S 7/487; G01S 17/10; G01S 17/42;**
G01S 7/4815; G01S 17/87

(54) **OPTO-ELEKTRONISCHES VERMESSUNGSGERÄT MIT SCANFUNKTIONALITÄT**

OPTO-ELECTRONIC MEASURING DEVICE WITH SCAN FUNCTIONALITY

APPAREIL DE MESURE OPTOÉLECTRONIQUE À FONCTIONNALITÉ DE BALAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.09.2019   Patentblatt 2019/39**

(73) Patentinhaber: **Hexagon Technology Center GmbH**
**9435 Heerbrugg (CH)**

(72) Erfinder:
• **HINDERLING, Jürg**
  **CH-9437 Marbach (CH)**
• **WOHLGENANNT, Rainer**
  **A-6833 Klaus (AT)**

(74) Vertreter: **Kaminski Harmann Patentanwälte AG**
**Landstrasse 124**
**9490 Vaduz (LI)**

(56) Entgegenhaltungen:
**EP-A1- 2 787 320**

**Beschreibung**

Die Erfindung betrifft ein opto-elektronisches Vermessungsgerät mit Scanfunktionalität nach dem Oberbegriff von Anspruch 1 und ein opto-elektronisches Messverfahren nach dem Oberbegriff des Anspruchs 14.

Opto-elektronische Vermessungsgeräte mit Scanfunktionalität, mit welchen basierend auf optischer Strahlung eine Position bestimmt wird, sind in vielfältigen Formen bekannt. Beispiele sind geodätische Vermessungsgeräte wie Total- oder Multistationen, beispielsweise Totalstationen und Laserscanner wie der Leica P20 oder Leica Multistation 50, Lasertracker oder Profiler, welche verwendet werden, um 3D-Koordinaten von Oberflächen zu messen bzw. zu erstellen, oder Laserscanner für geodätische oder industrielle Vermessungszwecke. 3D-Scannen ist eine sehr wirkungsvolle Technologie um innerhalb von Minuten oder Sekunden Millionen von räumlichen Messpunkten von Objekten zu produzieren. Typische Messaufgaben sind die Aufnahme von Objekten wie Zahnräder, Tragflächen, Schiffen oder Flugzeugen, bzw. deren Oberflächen oder Objekten wie Industrieanlagen, Häuserfassaden oder historischen Gebäuden, aber auch von Unfallorten und Verbrechensszenen. Zu diesem Zweck müssen sie in der Lage sein, den Messstrahl einer Entfernungsmessvorrichtung über eine Oberfläche zu führen und dabei gleichzeitig Richtung und Entfernung zum Messpunkt zu erfassen. Aus der Entfernung und der damit korrelierten Richtungsinformation für jeden Punkt wird mittels Datenverarbeitung eine sogenannte 3D-Punktwolke generiert.

Derartige Vermessungsgeräte weisen dazu wenigstens eine Strahlungsquelle zur Erzeugung von optischer Messstrahlung -oft Laserstrahlung- auf und optische Mittel wie Linsen, Prismen, Spiegel, lichtleitende Fasern oder Kollimatoren, mittels derer die erzeugte Messstrahlung in den freien Raum auf ein zu vermessendes Ziel emittierbar ist, weswegen diese Geräte auch als sog. Freistrahlsensoren bezeichnet werden. Unter optischer Messstrahlung wird dabei elektromagnetische Strahlung nicht nur im sichtbaren Bereich des Spektrums verstanden, sondern auch Strahlung im ultravioletten, im infraroten und Teraherz-Bereich. Bekannt sind opto-elektronische Vermessungsgeräte, die Messstrahlung mit einer Wellenlänge von 405nm, 532nm, 635nm, 650-690nm, 780nm bzw. 785nm, 795nm, 808-850nm, 905nm, 980nm, 1064nm oder zwischen 1500 und 1570nm verwenden.

Weiter weist ein solches Gerät eine Strahlumlenkeinheit auf, mittels die Messstrahlung um wenigstens eine Achse, meist zwei zueinander rechtwinklig ausgerichtete Achsen, z.B. eine vertikale und eine horizontale Achse, verschwenkt werden kann. Der Strahlablenker kann in Form eines bewegten Spiegels oder alternativ auch durch andere, zur gesteuerten Winkelablenkung von optischer Strahlung geeignete Elemente, wie beispielsweise rotierbare Prismen, bewegliche Lichtleiter, verformbare optische Komponenten etc. realisiert werden.

Das zu vermessende Ziel ist z.B. ein Punkt einer Oberfläche eines natürlichen Objekts. Das angestrahlte Ziel reflektiert Messstrahlung diffus oder gerichtet, so dass zumindest ein Teil der Messstrahlung auf das Vermessungsgerät zurückgeworfen wird. Das Vermessungsgerät weist einen opto-elektronischen Sensor auf, welcher ausgebildet ist zur zumindest zeitaufgelösten Detektion der Messstrahlung, z.B. eine APD-Diode, ein SPAD-Array, oder ein Array von SPAD-Arrays. Anhand der detektierten Messstrahlung wird die gesuchte Messgrösse, z.B. ein Entfernungs- und Richtungswert bzw. eine 2D-/3D-Koordinate, bestimmt. Hierbei stehen verschiedene Messprinzipien zur Verfügung, beispielsweise eine Laufzeitmessung (time of flight, TOF), die die Laufzeiten einzelner Laserpulse bestimmt und hieraus aus -mit Kenntnis der Lichtgeschwindigkeit- die Entfernung zum Zielobjekt.

Durch das Verschwenken werden dabei aufeinanderfolgend eine Vielzahl von Oberflächenpunkten des Zielobjekts abgetastet, wodurch z.B. eine 3D-Information über das Objekt als Ganzes erhalten werden kann bzw. ein 3D-Abbild der Messumgebung erstellt wird. Die Messung erfolgt meist unter Bestimmung von Entfernung und Winkeln, also in Kugelkoordinaten, welche zur Darstellung und Weiterverarbeitung auch in kartesische Koordinaten transformiert werden können.

Für schnelle und genaue Scanner ist insbesondere eine kurze Messzeit bei gleichzeitig hoher Messgenauigkeit gefordert, beispielsweise eine Distanzgenauigkeit im mm-Bereich oder darunter bei Messzeiten der Einzelpunkte im Bereich von Sub-Mikrosekunden bis Millisekunden. Der Messbereich reicht dabei von wenigen Zentimetern bis hin zu einigen Kilometern. Von besonderer Bedeutung ist dabei die räumliche Messauflösung. Sie bestimmt, welche Details noch erkannt werden können, aber auch die Dauer des Scanvorgangs und die dabei anfallende Datenmenge. Messprojekte mit modernen Hochgeschwindigkeitsscannern produzieren 3D-Punktwolken mit einer Mächtigkeit von beispielsweise mehreren Hundert Millionen oder mehreren Milliarden Objektpunkten und darüber hinaus.

Die Genauigkeit des Messergebnisses bzw. die Qualität der Bestimmung der jeweiligen Entfernungswerte ist wesentlich abhängig vom Signal-Rausch-Verhältnis (SNR). Dieses wiederum hängt entscheidend von der detektierten Strahlungsleistung ab. Vorteilhaft ist eine hohe detektierte Strahlungsleistung, um die Messstrahlung eindeutig und scharf vom elektronischen und photonischen Rauschen bzw. von Hintergrundstrahlung abgrenzen zu können. Bei der Vermessung von Zielen mit geringer Reflektivität bzw. kleinem Reflektionskoeffizienten, wie sie viele natürliche Oberflächen aufweisen, ist die detektierte Strahlungsleistung oft problematisch schwach. Unter natürlichen Zielen sind dabei auch menschengemachte Strukturen wie Beton, Asphalt oder Metall zu verstehen. Beispielsweise sind schwarze Zielobjekte wie Autoreifen nur sehr unzureichend oder gar nicht mit Scannern des Stands der Technik vermessbar. Andererseits führen auch spekular reflektierende Ziele wie Metalle oder im jeweiligen Wellenlängenbereich glänzende Oberflächen abseits der Richtung mit der stärksten Reflexion zu geringen detektierten Strahlungsleistungen und somit zu schlechten Messergebnissen.

Auf der anderen Seite wirkt sich ein erhöhtes Rauschen negativ auf das Signal-Rausch-Verhältnis und damit auf das Messergebnis aus. Erhöhtes bzw. hohes Rauschen tritt vor allem bei Messungen im Freien hauptsächlich durch Sonnenstrahlung auf, die direkt oder als Umgebungslicht diffus auf die Empfangsoptik und dann -z.B. auch trotz optischem Bandpassfilter- auf den Detektor des Vermessungsgeräts trifft. Insbesondere beim Anzielen und Messen von hellen Oberflächen, wie weissen Hausfassaden, kann die Hintergrundstrahlung erheblich sein, der Shot-Noise-Pegel in der Empfangseinheit steigt an und reduziert das Signal-Rauschverhältnis und damit die Messgenauigkeit.

Aus dem Stand der Technik ist bekannt, zur Erhöhung der detektierten Leistung bzw. Verbesserung des Signal-Rausch-Verhältnisses eine Laufzeitmessung nicht nur anhand eines einzigen jeweiligen detektierten Lichtpulses bzw. abgetasteten Punkts durchzuführen, sondern mehrere aufeinanderfolgende bzw. benachbarte Lichtpulse heranzuziehen und zur Messung zu verwenden. D.h. mehrere Lichtpulse und damit abgetastete Objektpunkte werden zu einem Scanpunkt zusammengefasst.

Allerdings erfolgt dies im Allgemeinen starr durch eine fixe benutzerseitige Vorgabe für den gesamten Scan, bei der der Benutzer auswählt, ob und in welchem Ausmass ein solches Zusammenfassen erfolgt. Vor einem Scanvorgang stellt der Benutzer jeweils am Bedienerinterface einen Quality-Faktor ein, welcher das typische Distanzrauschen festlegt. Wird in einem Scandurchgang eine relativ hohe Anzahl von Lichtpulsen und damit Punkten zusammengefasst, ermöglicht dies zwar brauchbare Messwerte bzw. Scanpunkte z.B. von schwach reflektierenden Zielen zu erhalten, allerdings wird damit höchstens im Nahbereich ein ausreichend dichtes Scanraster erzeugt. Bei weiter entfernten Objekten hingegen "fehlen" dann Abtastpunkte bzw. es liegt nur ein sehr weitmaschiges Scanraster vor und die Ortsauflösung ist zu gering, um die Geometrie eines jeweiligen Objekts zufriedenstellend zu erfassen. Umgekehrt lassen sich zwar mit einem Scan mit Auswertung z.B. jeden einzelnen Lichtpulses ("Einzelschuss") auch entferntere Objekte ausreichend gut aufgelöst scannen, dann jedoch entsteht wieder das genannte Problem eines schlechten SNR, z.B. bei starker Intensität des Hintergrundsignals oder schlecht reflektierenden Zielobjekten im Scanbereich.

Aufgabe der vorliegenden Erfindung ist deshalb die Bereitstellung eines verbesserten opto-elektronischen Vermessungsgeräts mit Scanfunktionalität und eines ebensolchen Scanverfahrens.

Eine weitere Aufgabe der vorliegenden Erfindung ist die Bereitstellung eines verbesserten opto-elektronischen Vermessungsgeräts mit Scanfunktionalität und eines ebensolchen Scanverfahrens mit verbesserter Messung von Entfernungen nach dem Laufzeitverfahren.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Die Erfindung betrifft ein opto-elektronisches Vermessungsgerät mit Scanfunktionalität, z.B. ein bodengestütztes und/oder stationäres Vermessungsgerät, vorzugsweise ein Laserscanner, Lasertracker, ein Profiler oder Totalstation. Das Vermessungsgerät weist eine Pulsstrahlungsquelle zur Erzeugung eines Messstrahls aus Lichtpulsen oder Lichtimpulsfolgen (Bursts) auf. Die Lichtpulse werden dabei mit einer vorgegebenen oder adaptiv angepassten Emissionsrate emittiert. Beispielsweise weist das Gerät eine Laserquelle auf und erzeugt Laserpulse.

Weiter weist das Gerät eine Optik zur Emission der Lichtpulse in den freien Raum auf ein Zielobjekt auf und eine Strahlumlenkeinheit zur Variation oder zum Verschwenken der Emissionsrichtung der Lichtpulse mit einstellbarer Sendeleistung um wenigstens eine Achse, insbesondere um zwei zueinander rechtwinklige Achsen, dergestalt, dass eine scannende Abtastung des Zielobjekts ausführbar ist, wobei ein Scanraster aus Scanpunkten gebildet wird. Die Variation der Emissionsrichtung mittels des Strahlumlenkers erfolgt dabei bevorzugt mit zumindest annähernd konstanter Geschwindigkeit oder mit gleich bleibendem Umlauf. Zudem weist das Gerät wenigstens einen Winkelsensor oder Positionssensor auf, mit dem die jeweils vorliegende Emissionsrichtung messbar ist, z.B. einen oder mehrere Winkelencoder.

Darüber hinaus weist das Gerät einen opto-elektronischen Detektor zur Detektion von vom Zielobjekt reflektierten Lichtpulsen auf und eine Steuerung mit Auswertefunktionalität, die ausgebildet ist zur Messung eines Entfernungswerts zu einem jeweiligen Scanpunkt des Zielobjekts nach dem Time-of-Flight-Prinzip, basierend auf einer Anzahl $n>=1$ detektierter Lichtpulse. Die Steuer- und Auswerteeinheit ist zudem zur automatischen Einstellung der Anzahl abhängig von einem vom Vermessungsgerät vor Ort ermittelten, zielobjektbezogenen Messwert ausgebildet.

Mit anderen Worten wird ein oder mehrere detektierte Lichtpulse zur Bestimmung eines jeweiliger Entfernungswerts herangezogen, wobei die Auswahl, auf wie vielen Lichtpulsen ein jeweiliger Entfernungswert basiert, automatisch von der elektronischen Steuerung des Vermessungsgeräts in Abhängigkeit eines in Echtzeit oder live gemessenen Messwerts, welcher mit dem Zielobjekt verknüpft ist, bestimmt wird. Vorteilhaft liegt also keine starre, von vorneherein fixe Vorgabe hinsichtlich der Anzahl der einem Scanpunkt zugrundeliegenden Lichtpulse vor, sondern die Anzahl der zu einem Scanpunkt zusammengefassten Lichtpulse wird flexibel und automatisch an gerade vorliegende Messbedingungen angepasst. Zum Beispiel wird automatisch von der Steuerung mit Auswertefunktionalität abhängig von im Rahmen des Scanvorgangs gemessenen Entfernungswerten als Messwerte von Einzelschuss auf Akkumulation von zwei oder mehr Lichtpulse umgeschaltet, so dass manche Scanpunkte der resultierenden Punktwolke auf einem detektierten Lichtpuls basieren, anderen Scanpunkten hingegen mehrere Abtastpunkte zugrunde liegen.

Somit kann vorteilhaft beispielsweise die Qualität der abgetasteten Punkte, also der Punkte auf der Objektoberfläche, verbessert werden, indem eine gleitende Mittelung (gleitender Mittelwert/Durchschnitt, moving average) über n>=2 benachbarte Lichtpulse bzw. Messpunkte erfolgt, so dass also die Zahl der Scan- oder 3D-Punkte auf dem Objekt im Vergleich zur Lichtpulsanzahl n=1 (jeder detektierte Lichtpuls wird zur Bestimmung eines Scanpunkts herangezogen) nicht reduziert wird. Zudem kann alternativ oder zusätzlich die Anzahl der Scanpunkte (z.B. ein 3D-Punkt der resultierenden 3D-Punktwolke) variabel und automatisch an die konkrete Messsituation angepasst werden.

Vorzugsweise handelt es sich bei dem zielobjektbezogenen Messwert um einen Entfernungswert zum Zielobjekt, so dass also die Anzahl an die Entfernung zum Zielobjekt bzw. die Messdistanz angepasst werden kann. Alternativ oder zusätzlich wird als Messwert eine Signalcharakteristik eines oder mehrerer detektierter Lichtpulse herangezogen, insbesondere eine Signalstärke oder Intensität oder das Signal-Rausch-Verhältnis (SNR) oder Lichtpulsflankensteilheit.

In einer Fortbildung ist die Steuer- und Auswerteeinheit dergestalt ausgebildet, dass, insbesondere mittels wenigstens eines definierten absoluten oder relativen Grenzwerts für den zielobjektbezogenen Messwert, eine automatische Einstellung der Anzahl detektierter Lichtpulse derart erfolgt, dass wenigstens ein erster Bereich mit einer im Vergleich zu einem zweiten Bereich erhöhten Anzahl vorliegt. Beispielsweise handelt es sich beim Messwert um einen Entfernungswert und der erste Bereich liegt für Entfernungswerte unterhalb einer Maximalentfernung vor, so dass also beispielsweise für Scanpunkte, die ausserhalb der Maximalentfernung liegen, die Anzahl der zugrunde liegenden detektierten Laserpulse bei eins liegt und für Scanpunkte innerhalb der Maximalentfernung bei wenigstens zwei. Alternativ oder zusätzlich ist der Messwert eine Signalstärke des bzw. der detektierten Laserpulse und der erste Bereich mit einer relativ erhöhten Anzahl gilt für Signalstärken unterhalb einer Grenzsignalstärke.

Vorzugsweise ist die Steuer- und Auswerteeinheit dabei dergestalt ausgebildet, dass zumindest für den ersten Bereich die Messung eines jeweiligen Entfernungswerts auf einer Mittelung über eine Anzahl n>=2 detektierter Lichtpulse basiert, entweder nach dem Prinzip des gleitenden Mittelwerts, so dass die Zahl der Scanpunkte unabhängig von der eingestellten Anzahl detektierter Lichtpulse ist, oder anhand einer die Zahl der Scanpunkte (im Vergleich zur Anzahl n=1) reduzierenden Mittelung. D.h. mehrere detektierte Lichtpulse bzw. daraus abgeleitete Entfernungswerte werden jeweils zu einem Entfernungswert zusammengefasst, wobei dies -im Vergleich zum einem Vorgehen ohne Mittelung- entweder in einer gleichbleibenden Scanpunktzahl resultiert oder in einer verminderten. Dabei wird erfindungsgemäss vorteilhaft die Anzahl abhängig vom zielobjektbezogenen Messwert bzw. je nach Bereich variabel eingestellt, so dass beispielsweise in einem ersten Scanbereich über eine Anzahl n=6 gemittelt wird und in einem weiteren, entfernteren Scanbereich oder einem Scanbereich mit besserer Signalstärke der detektierten Pulse über eine Anzahl n=2.

In einer Fortbildung des erfindungsgemässen Vermessungsgeräts erfolgt die automatische Einstellung der Anzahl, indem der Detektor und die Steuer- und Auswerteeinheit ausgebildet sind zur detektorseitigen Aufsummierung einer Anzahl n>=1 aufeinanderfolgender erfasster Lichtpulse bzw. zur Aufsummierung von Lichtimpulsfolgen zu einem resultierenden Gesamtpuls und die Messung eines Entfernungswerts zum Zielobjekt durch Anwendung des Time-of-Flight-Prinzips (erst) auf den resultierenden Gesamtpuls erfolgt. Die Aufsummierung erfolgt also z.B. mittels in der Regel mehrerer Akkumulatoren im FPGA (field programmable gate array), wo die empfangenen Impulssignalkurven addiert werden.

Optional erfolgt dabei die Aufsummierung solange, bis der resultierende Gesamtpuls ein vorgegebenes, an den objektbezogenen Messwert gebundenes Abbruch- oder Stoppkriterium erfüllt, wobei z.B. das Abbruchkriterium ein zu überschreitender, im Speziellen untergrundabhängiger, Signalstärkenschwellwert ist und/oder eine zu unterschreitende Fehlertoleranz/-grenze des basierend auf dem resultierenden Gesamtpuls gemessenen Entfernungswerts ist. Alternativ oder zusätzlich ist der zielobjektbezogene Messwert ein Entfernungswert zum Zielobjekt und das Abbruchkriterium ist eine sprunghafte Änderung des Entfernungsmesswerts, wobei eine sprunghafte Änderung z.B. eine relative Änderung um mindestens 3%, 5% oder 10% ist. Eine solche sprunghafte Änderung deutet z.B. darauf hin, dass eine Ecke oder Kante des Objekts gescannt wird und durch ein weiteres Aufsummieren eine Mittelung über die Ecke oder Kante hinweg erfolgen und diese somit nachteilig verschmiert würde.

Alternativ zur Addition von Impulssignalkurven erfolgt eine rein digitale Einstellung der Anzahl durch Heranziehen der den aufeinanderfolgenden erfassten Lichtpulsen jeweils zugeordneten Distanzwerte, so dass also beispielsweise für eine Anzahl n=2 der resultierende, einem Scanpunkt letztlich zugeordnete Entfernungswert aus einer Mittelung aus zwei solcher Distanzwerte gebildet ist. Auch für diese Alternative wird als Option ein Abbruchkriterium wie oben beschrieben definiert, so dass z.B. solange Distanzwerte zu einer Mittelung weiter herangezogen werden bis das Abbruchkriterium, z.B. eine Fehlertoleranz für den resultierenden Entfernungswert, erfüllt ist. D.h. die Einstellung der Anzahl ist dynamisch abhängig vom Abbruchkriterium.

Ein Zusammenfassen von Laserpulsen (also eine Einstellung der Anzahl n>=2) kann also in unterschiedlicher Art erfolgen. Einerseits kann eine Akkumulation des mit einem AD-Wandler erfassten Zeitsignals über mehrere Laserpulse oder Laserburstfolgen erfolgen und nach erfolgter Akkumulation eine Distanz berechnet werden, anderseits kann jedes einzelne Zeitsignal separat ausgewertet werden und eine zugehörige bestimmt werden, über welche anschliessend numerisch der Mittelwert gebildet wird. Eine Mittelung über mehrere Laserpulse bedeutet dabei nicht automatisch eine Reduktion der Punktrate. Mittels eines "moving averages" kann die Punktrate beliebig eingestellt werden, beispielsweise gleich hoch wie die Laserschussrate. Dies hat den Vorteil einer winkel-konstanten Punktdichte, welche insbesondere bei weiter entfernten Objekten nicht zu "fehlerhaften" Abtastpunkten führt, also ein sehr weitmaschiges Scanraster verhindert und die Ortsauflösung beibehält. Durch das Mitteln über mehrere Laserpulse oder Laserburstfolgen verbessert sich das Distanzrauschen, und zwar bei allen Distanzbereichen. Eine Signalmittelung hat aber bei grossen Distanzen den Nachteil, Objektgeometrien und -signaturen zu verschmieren. Die laterale Ortsauflösung wird reduziert. Erfolgt die Mittelung hingegen lediglich über einen lateralen Schwenkbereich, der nicht wesentlich grösser ist als das laterale Laserstrahlprofil, dann bleibt die Ortsauflösung am Messobjekt erhalten. Wird die Akkumulation oder die Mittelung von Laserimpulsen mit Berücksichtigung des lateralen Laserstrahlprofils in Funktion der Messdistanz bzw. des Entfernungswerts ausgelegt, so kann eine optimale Ortsauflösung bei kleinst möglichem Distanzjitter erreicht werden. Besonders im Nahbereich, wo die Winkelausdehnung des Laserstrahls besonders gross ist, kann über sehr viele Laserpulse gemittelt werden, ohne dass es zu einer Verwaschung von Kanten und Ecken der zu vermessenden Gegenstände führt.

Falls die Laserleistung zwecks Einhaltung der Augensicherheit im Nahbereich zusätzlich reduziert werden muss, dann kann dies ohne weiteres umgesetzt werden, ohne dass dabei die erwartete Qualität der Messpunkte reduziert würde, da gleichzeitig die Akkumulation oder die Mittelung von Laserimpulsen hochgefahren wird. Dieser für die Lasersicherheit wesentliche Distanzbereich wird NOHD genannt (Nearest optical hazard distance). In einer Fortbildung ist demgemäss die Steuer- und Auswerteeinheit ausgebildet zur automatischen Erhöhung der Anzahl detektierte Lichtpulse und zur damit verknüpften und darauf abgestimmten Reduktion der Leistung des emittierten Messstrahls für Entfernungswerte unterhalb eines definierten Grenzentfernungswerts im Vergleich zu Entfernungswerten oberhalb des Grenzentfernungswerts, insbesondere wobei es sich bei dem Grenzentfernungswert um den Nominellen Augen-Gefahrenabstand (NOHD) handelt. Anders formuliert ist die Steuerung ausgebildet zur Berücksichtigung von Augensicherheitsparametern, dergestalt, dass in einem definierten Bereich nahe beim Vermessungsgerät die Anzahl automatisch erhöht wird bei automatischer Reduktion der emittierten Leistung des Messstrahls bzw. der Lichtpulse. Mit anderen Worten wird automatisch zur Sicherstellung der Augensicherheit in einem bestimmten Bereich in der Nähe des Geräts die Lichtleistung erniedrigt und gleichzeitig die Anzahl z.B. der aufsummierten Lichtpulse erhöht, so dass die Leistungseinbussen detektor- bzw. auswerteseitig ausgeglichen werden.

Als weitere Option erfolgen in derartigen erfindungsgemässen Vermessungsgeräten ausgehend von unterschiedlichen Startpulsen parallel mehrere detektorseitige Aufsummierungsvorgänge einer jeweiligen Anzahl erfasster Lichtpulse. Dabei ist bei allen Vorgängen die Anzahl gleich oder es werden unterschiedliche Anzahlen verwendet, wobei dies auch variabel änderbar sein kann.

Dabei kann jeder einzelne detektierte Lichtpuls als Startpuls einer Akkumulation verwendet werden, so dass die Zahl bzw. das Raster der Scanpunkte der Zahl bzw. dem Raster der abgetasteten Punkte entspricht oder es wird z.B. jeder fünfte, zwölfte etc. Lichtpuls als erster Puls des Aufsummiervorgangs verwendet.

Für den Fall, dass der zielobjektbezogene Messwert ein Entfernungswert ist, ist dieser optional durch eine vorhergehende lichtpulsbasierte Messung bestimmt. D.h. der für das Einstellen der Anzahl herangezogene Entfernungswert ist nach dem gleichen Prinzip bzw. mit den gleichen Mitteln gemessen wie die Entfernungswerte der Scanpunkte. Beispielsweise wird bei zeilenweiser scannender Abtastung derjenige Entfernungswert aus einer der vorigen Scanzeilen herangezogen, welcher der zur jeweilig vorliegenden Emissionsrichtung benachbarten Emissionsrichtung entspricht oder es wird der letzte bekannte oder zuletzt bestimmte Entfernungswert verwendet.

Alternativ oder zusätzlich weist zur Messung eines Entfernungswerts als zugrunde liegender Messwert für das Einstellen der Anzahl das Vermessungsgerät einen zusätzlichen (Grob-)Entfernungsmesser auf, welcher einen Entfernungswert zum Zielobjekt bestimmen kann und hierzu ohne Nachteile weniger präzise als die mit den Lichtpulsen gemessenen Entfernungswerte sein kann. Ein solcher Entfernungsmesser zur Bereitstellung zumindest einer ungefähren Distanzinformation zum Zielobjekt ist z.B. ausgebildet als RIM-Kamera, elektronischer Distanzmesser (Disto), Lichtfeldkamera, Stereokamera oder Kamera zur Distanzbestimmung mittels Bildverarbeitung.

Optional ist die Steuer- und Auswerteeinheit ausgebildet, die automatische Einstellung der Anzahl dergestalt vorzunehmen, dass durch die scannende Abtastung ein zumindest im Wesentlichen entfernungsunabhängiges und/oder gleichmässiges oder konstantes Scanraster erzeugt wird. Mit anderen Worten wird also sichergestellt, dass bezogen auf die jeweilige Objektfläche eine uniforme Verteilung der Scanpunkte erreicht wird, z.B. auch unabhängig davon, in welcher Entfernung sich ein jeweiliges Zielobjekt befindet. Dies gilt dann entweder für einen Teilbereich des Scanrasters (z.B. für den Nahbereich der Vermessung, also z.B. den Umkreis von 10m-15m um das Vermessungsgerät) oder optional für das vollständige Scanraster.

In Ausführungsformen, in denen der zielobjektbezogene Messwert ein Entfernungswert zum Zielobjekt ist, erfolgt als weitere Option die automatische Einstellung der Anzahl angepasst an den effektiven Durchmesser oder Radius des Messstrahls, wobei eine Entfernungsabhängigkeit des effektiven Strahldurchmessers berücksichtigt wird. D.h. die Einstellung berücksichtigt, dass sich der Durchmesser des Lasermessstrahls mit der Entfernung zum Zielobjekt vergrössert (d.h. aufgrund einer Strahldivergenz ist der effektive Durchmesser des am Zielobjekt wirkenden Messstrahls abhängig von der Distanz zwischen Messgerät und Zielobjekt) und passt den Akkumulations- oder Mittelungsbereich mittels Einstellen der Anzahl entsprechend an. Vorzugsweise erfolgt diese automatische Einstellung der Anzahl dergestalt, dass lediglich über Laserpulse gemittelt wird, die räumlich nicht weiter auseinander liegen als ein einstellbarer Überlappungsbereich des Laserstrahls auf dem zu scannenden Gegenstand. Da Laserstrahlen, unabhängig vom jeweiligen Fokussierzustand, bei grösseren Distanzen divergieren, ist bei fester Scangeschwindigkeit und fester Laserschussrate die Anzahl der Laserpulse innerhalb des durch den Strahldurchmesser aufgespannten Winkelbereich ab einer Maximalentfernung distanzunabhängig. Es ist daher vorteilhaft bei Distanzen kürzer als dieser Maximalentfernungswert die Anzahl der Laserpulse bzw. zu mittelnder Distanzen anzupassen.

Als Option ist die Steuer- und Auswerteeinheit ausgebildet zur automatischen Einstellung der Anzahl dergestalt, dass das Scanraster angepasst an den effektiven Radius des Messstrahls gebildet ist, wobei eine Entfernungsabhängigkeit des Radius berücksichtigt wird, insbesondere wobei die automatische Einstellung der Anzahl dergestalt erfolgt, dass der Abstand aufeinanderfolgender Scanpunkte dem Radius des Messstrahls oder einem wählbaren Bruchteil oder Vielfachen des Radius des Messstrahls entspricht, zumindest für Scanpunkte, deren zugehöriger Entfernungswert nicht grösser als ein Maximalentfernungswert ist. D.h. die Einstellung berücksichtigt, dass sich der Durchmesser des Messstrahls oder der Radius der Lichtpulse mit der Entfernung zum Zielobjekt ändert und passt das Scanraster mittels Einstellen der Anzahl entsprechend an.

Als weitere Option ist die Steuer- und Auswerteeinheit dergestalt ausgebildet, dass auf einem Benutzerdisplay vorab oder auch während des Scanvorgangs ein Benutzerhinweis ausgegeben wird, wobei der Benutzerhinweis anzeigt, ob ein gewünschtes oder vorgegebenes Scanraster für vorliegende oder gewählte Messparameter, insbesondere Lichtpulsemissionsrate, Geschwindigkeit der Messachsenausrichtungsvariation (Verschwenkrate) und/oder Messreichweite, einhaltbar ist. Das Benutzerdisplay ist dabei entweder integraler Bestandteil des Vermessungsgeräts oder mit diesem z.B. drahtlos verbunden, beispielsweise in Form eines externen Rechners (Tablet etc).

In einer weiteren Fortbildung ist die Steuer- und Auswerteeinheit ausgebildet zur automatischen Einstellung auch der Laserpulsemissionsrate abhängig von einem vom Vermessungsgerät vor Ort ermittelten, zielobjektbezogenen Messwert, insbesondere Entfernungswert. Dabei ist vorzugsweise die Steuer- und Auswerteeinheit ausgebildet, um gleichzeitig mehrere Lichtpulse in der Luft (Schussrate grösser als die Flugzeit der Laserpulse) identifizieren und verarbeiten zu können, wie beispielsweise in der EP 3 118 651 A1 der gleichen Anmelderin beschrieben. Dies erlaubt, die Laserpulsemissionsrate unabhängig von der Laserpuls-Flugzeit einzustellen, was insbesondere bei grossen Distanzen von Bedeutung ist.

Aus EP 2 787 320 A1 ist eine Totalstation und ein Verfahren bekannt, wobei das Scannen mit fixen unterschiedlichen Scanmodi geschieht, die anhand eines einmalig gemessenen bzw. herangezogenen Parameters einmal für den gesamten Scan ausgewählt werden und in sich festgelegt sind.

Bevorzugt ist dabei weiter die Steuer- und Auswerteeinheit ausgebildet ist zur automatischen Einstellung der Laserpulsemissionsrate derart abgestimmt auf die Einstellung der Anzahl detektierter Lichtpulse, dass der messstrahlradiusabhängige Abstand aufeinanderfolgender Scanpunkte entfernungsunabhängig gewährleistet ist. Mit anderen Worten wird die automatische Einstellung der Laserpulsemissionsrate derart genutzt, dass die Laserpulsemissionsrate oberhalb eines Maximalentfernungswerts höher ist als unterhalb des Maximalentfernungswerts, so dass auch für Scanpunkte, deren zugehöriger Entfernungswert grösser ist als der Maximalentfernungswert, der Abstand aufeinanderfolgender Scanpunkte möglichst weniger als einem einstellbaren Bruchteil oder Vielfachen des Durchmessers des Messstrahls entspricht. D.h. die Emissionsrate wird vorzugsweise automatisch derart eingestellt, dass unabhängig von der Messdistanz bzw. für den gesamten Messbereich erreicht wird, dass der Abstand aufeinanderfolgender Scanpunkte höchstens dem effektiven Durchmesser des Messstrahls entspricht, auch für Entfernungen zum Zielobjekt, die oberhalb eines kritischen Werts liegen. Beispielsweise liegt also ein Grenzentfernungswert vor, bei dem mit der Anzahl eins (also jeder Laserpuls ergibt ein Scanpunkt) der Abstand aufeinanderfolgender abgetasteter Punkte dem effektiven Durchmesser des Messstrahls entspricht.

Bei ausreichend grosser Laserpulsemissionsrate und/oder kleiner Winkelgeschwindigkeit der Scanachse (hochauflösende Scaneinstellung) kann dieser Grenzentfernungswert unendlich sein, was bedeutet, dass der Scanwinkel zwischen zwei Laserpulsemissionen kleiner ist als der effektive Strahldurchmesser. In diesem Fall kann die Anzahl n>1 betragen, auch für beliebig grosse Distanzen, ohne dass Kanten oder Ecken durch Mittelung verfälscht werden. In jedem Fall kann unterhalb des Grenzentfernungswerts durch Erhöhen der Anzahl die Messgenauigkeit erhöht und/oder der Abstand der Scanpunkte verkleinert werden. Insbesondere bei schnellen Scans wie Übersichtsscans wird vorzugsweise oberhalb des Grenzentfernungswerts die Schussrate erhöht und damit der gewünschte oben beschriebene Abstand erzielt.

Gegenstand der vorliegenden Erfindung ist zudem ein opto-elektronisches Messverfahren zum optischen Abtasten eines Zielobjekts mit Emittieren eines gepulsten Messstrahls auf das abzutastende Zielobjekt mit Variation oder Verschwenken der Emissionsrichtung der Lichtpulse um wenigstens eine Achse, insbesondere zwei zueinander rechtwinklige Achsen, dergestalt, dass eine scannende Abtastung des Zielobjekts ausführbar ist, wobei ein Scanraster aus Scanpunkten gebildet wird, fortwährendem Messen der Emissionsrichtung und Detektieren von vom Zielobjekt reflektierten Lichtpulsen. Weiter umfasst das Verfahren das Messen eines Entfernungswerts zu einem jeweiligen Scanpunkt des Zielobjekts nach dem Time-of-Flight-Prinzip, wobei zur Messung eine Anzahl n>=1 detektierter Lichtpulse oder Lichtemissionen herangezogen wird. Weiter umfasst das Verfahren das automatische Einstellen der Anzahl der zur Messung herangezogenen Lichtpulse abhängig von einem in Echtzeit ermittelten, zielobjektbezogenen Messwert.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des erfindungsgemässen Verfahrens, wenn das Programm in einer Steuer- und Auswerteeinheit eines erfindungsgemässen Vermessungsgeräts ausgeführt wird.

Das erfindungsgemässe Vermessungsgerät und das erfindungsgemässe Verfahren werden nachfolgend anhand von den in den Zeichnungen schematisch dargestellten Ausführungen und Anwendungsvorgängen näher beschrieben.

Im Einzelnen zeigen

Fig.1        ein erfindungsgemässes Vermessungsgerät,

Fig.2a,b    das erfindungsgemässe Einstellen der Anzahl abhängig von einem Messwert,

Fig.3        eine Ausbildungsform der Erfindung,

Fig.4a,b    zwei Beispiele für ein entfernungswertabhängiges Einstellen der Anzahl n der Lichtpulse,

Fig.5a,b    einen Grenzfall der automatischen Einstellung der Anzahl,

Fig.6a-d    ein Beispiel für ein erfindungsgemässes automatisches Einstellen der Anzahl basierend             auf einer Lichtpulscharakteristik, und

Fig.7a,b    weitere Fortbildungen der Erfindung mit             mehreren parallelen Akkumulationen.

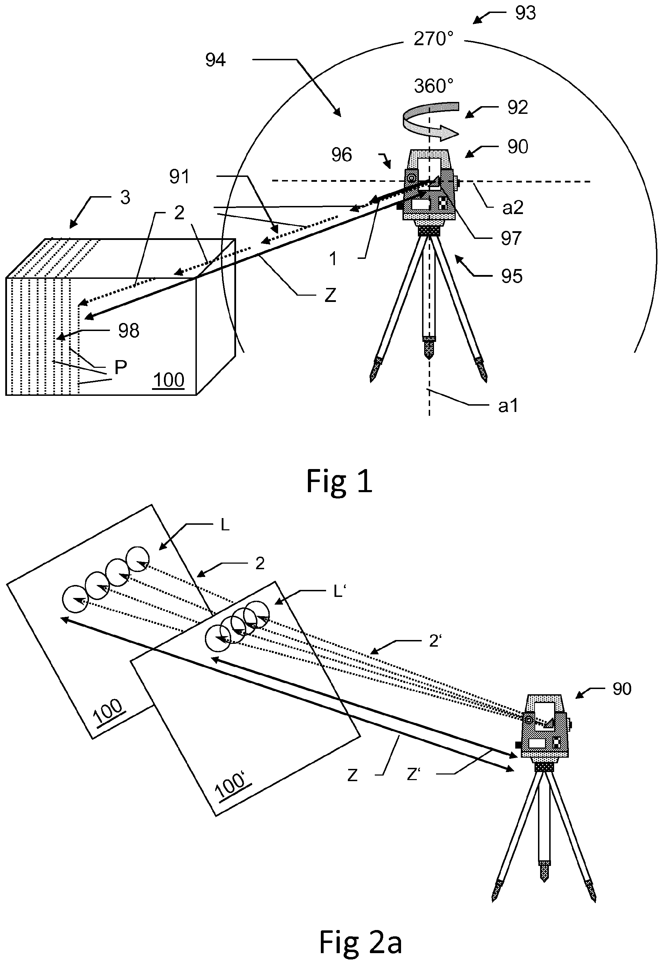

Figur 1 zeigt ein stationäres Vermessungsgerät 90 mit Scanfunktionalität zum Aufnehmen von Objektoberflächen 100, z.B. ausgebildet als Laserscanner. Das Gerät weist eine intensitätsmodulierte, insbesondere gepulste Strahlungsquelle auf (nicht dargestellt), z.B. eine Laserquelle, und eine Optik (nicht dargestellt), so dass ein gepulster Messstrahls 91 in den freien Raum auf ein Zielobjekt 100 in eine Emissionsrichtung 1 emittierbar ist (die einzelnen Pulse 2 sind durch die einzelnen gestrichelten Pfeile angedeutet), wobei die Emissionsrichtung 1 eine Messachse definiert und durch einen oder mehrere Positions-/Winkeldetektoren (nicht dargestellt) die jeweils vorliegende Richtung 1 der Emission bzw. der Messachse gemessen wird. Die Optik ist beispielsweise als eine kombinierte Sende- und Empfangsoptik ausgeführt oder weist je eine separate Sendeoptik und Empfangsoptik auf. Hierbei werden vom Zielobjekt 100 reflektierte Lichtpulse vom Vermessungsgerät 90 empfangen und von einem opto-elektronischen Detektor (nicht dargestellt) erfasst. Hierbei können beispielsweise bis zu einer Million oder mehr Lichtpulse pro Sekunde und damit Abtastpunkte 98 erfasst werden.

Zum scannenden Abtasten des Objekts 100 wird die Messstrahlung 91 bzw. Emissionsrichtung 1 fortlaufend verschwenkt und sukzessive in kurzen Zeitabständen jeweils wenigstens ein Messwert pro Scanpunkt P aufgenommen, darunter jedenfalls ein Entfernungswert Z zum jeweiligen Scanpunkt P, so dass eine Vielzahl von zu einem jeweiligen Scanpunkt P gehörige Messrichtungen vorliegt und aus einer Vielzahl von Scanpunkten P ein Scanraster 3 bilden.

Neben dem Entfernungsmesswert Z wird optional beispielsweise ein Helligkeits- oder Intensitätswert aufgenommen. Die Helligkeit ist ein Graustufenwert, welcher beispielsweise durch Integration der bandpass-gefilterten und verstärkten Messstrahlung über eine dem Objektpunkt zugeordnete Messperiode ermittelt wird.

Das Verschwenken erfolgt dabei mittels eines Strahlumlenkers, wie dargestellt beispielsweise, indem ein Oberteil 96 des Vermessungsgeräts 90 gegenüber einer Basis -relativ langsam- um eine erste, vertikale Achse a1 schrittweise oder kontinuierlich rotiert wird, so dass die Messstrahlung 91 in der Horizontalen verschwenkt wird und sich die Vielzahl von Emissionsrichtungen 1 untereinander in der horizontalen Ausrichtung unterscheiden, und indem ein verschwenkbares optisches Bauteil 97, z.B. ein Schwenk- oder Drehspiegel, -relativ schnell- um eine horizontale Achse a2 rotiert wird, so dass die Messstrahlung 91 in der Vertikalen verschwenkt wird und sich die Vielzahl von Emissionsrichtungen 1 untereinander zusätzlich in der vertikalen Ausrichtung unterscheiden. Dadurch wird die Objektoberfläche 100 z.B. mit einem Linienraster wie dargestellt zeilenweise gescannt. Das Scannen erfolgt dabei innerhalb eines vorbestimmten Winkelbereichs 94, dessen Grenzen durch eine horizontale und vertikale Verschwenkungsbreite festgelegt ist. Bevorzugt beträgt der Winkelbereich 94 in der Horizontalen 360°, also eine vollständige Umdrehung um die vertikale Achse a1, und in der Vertikalen z.B. 270°, so dass ein kugelförmiger Bereich 94 vorliegt, welcher beinahe den gesamten Umgebungsbereich in alle Raumrichtungen abbildet. Es sind aber auch beliebige andere Winkelbereiche 94 möglich.

Ebenso gibt es Realisierungsformen bei der die vertikale Auflösung nicht durch eine zusätzliche Drehachse realisiert wird, sondern durch mehrere, simultan arbeitende Sende- und Empfangseinheiten, die einen bestimmten konstanten Winkelversatz in vertikaler Richtung z.B. von 1° besitzen. Sinngemäss ist auch hier die Anpassung der Laserschussrate bzw. der Anzahl der berücksichtigten Messpunkte pro Scanpunkt für jede einzelne Sende-Empfangseinheit möglich wie hier beschrieben («Multibeam»).

Zum Messen des Entfernungswerts Z weist das Vermessungsgerät 90 eine elektronische Steuerung auf (nicht dargestellt), welche eine Auswertefunktionalität umfasst zur Messung des jeweiligen Entfernungswerts Z nach dem Laufzeitprinzip (Auswertung nach der Time-of-Flight-Methode), basierend auf einer Anzahl $n \geq 1$ (n ganzzahlig) reflektierter und detektierter Lichtemissionen, beispielsweise Lichtpulse oder Lichtpulsfolgen. Mit anderen Worten wird zum Bestimmen des Entfernungswerts Z entweder ein detektierter Lichtpuls herangezogen oder mehrere detektierte Lichtpulse.

Erfindungsgemäss ist diese Steuer- und Auswerteeinheit des Vermessungsgeräts 90 derart ausgebildet, dass durch diese die Anzahl der pro Entfernungswert Z bzw. Scanpunkt P herangezogenen Lichtpulse automatisch eingestellt wird und zwar abhängig von einem vom Vermessungsgerät 90 vor Ort bzw. in Echtzeit ermittelten Messwert. Der Messwert ist dabei mit dem Zielobjekt 100 verknüpft.

Anders formuliert, ist die Anzahl der Lichtpulse, aus denen ein Entfernungswert Z gemessen wird, nicht fix für den Scanvorgang beispielsweise durch den Benutzer vorgegeben, sondern wird von der Steuerung anhand eines aktuell ermittelten Messwerts «live» angepasst. Dies hat den Vorteil, dass die Anzahl optimal an die Messsituation, z.B. die Entfernung zum Zielobjekt 100 (z.B. Scan bzw. Zielobjekt im Nahbereich oder im Fernbereich) oder den Messsignalpegel, und selbsttätig angepasst wird.

Bei dem Messwert handelt es sich bevorzugt um einen Entfernungswert Z zum Zielobjekt 100, welcher z.B. anhand einer vorherigen Anzahl detektierter Lichtpulse gemessen wurde. Alternativ wird ein derartiger Entfernungswert als Messwert durch ein anderes Messprinzip bzw. einen zusätzlichen Entfernungsmesser wie beispielsweise einem elektronischen Entfernungsmesser mit wesentlich geringerer Genauigkeit (Grobentfernungsmesser), einem Stereokamerasystem, einer Lichtfeldkamera, eine RIM-Kamera (Range-Image-Kamera) oder eine 2D-Kamera mit Bildverarbeitungssystem zur Distanzschätzung anhand eines oder mehrerer aufgenommener 2D-Bilder (z.B. anhand eines im Bild erkannten Objekts bekannter Grösse). Der der automatischen Einstellung zugrunde liegende Entfernungswert wird also entweder mit Hilfe der Laseremission selbst gemessen oder mit Hilfe einer zusätzlichen Entfernungsmessvorrichtung des Vermessungsgeräts 90, welche eine ungefähre Entfernung zum Zielobjekt 100 bestimmt, beispielsweise mit einer Genauigkeit im Meter-, Dezimeter- oder Zentimeterbereich.

Zusätzlich oder alternativ wird als Messwert zur Einstellung der Anzahl eine Signalcharakteristik eines oder mehrerer detektierter Lichtpulse 2 herangezogen, z.B. die empfangene (relative oder absolute) Lichtpulsintensität oder Lichtpulsbreite. Da derartige Signalcharakteristika unter anderem von Eigenschaften des Zielobjekts 100 abhängig sind (z.B. ist die empfangene Lichtpulsintensität abhängig von der Reflektivität des Zielobjekts 100), ist ein solcher Messwert somit auch zielobjektbezogen oder mit dem Zielobjekt 100 verknüpft.

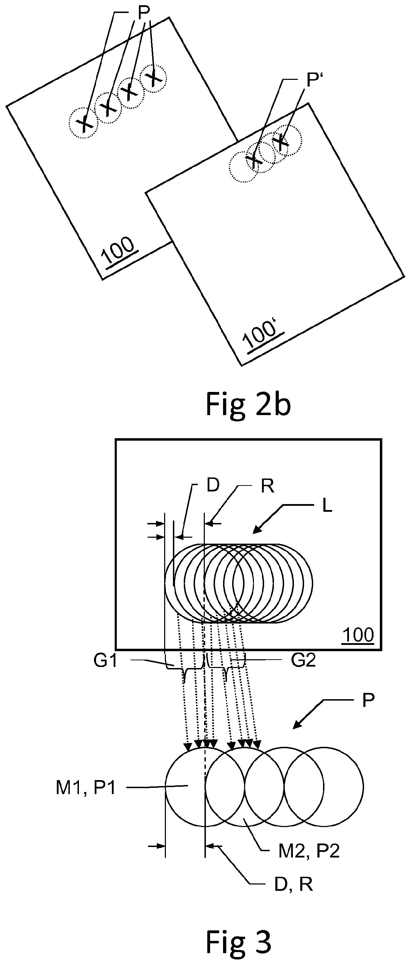

Die Figuren 2a und 2b illustrieren das erfindungsgemässe Einstellen der Anzahl herangezogener Entfernungswerte abhängig von einem Messwert, im Beispiel abhängig vom Entfernungswert Z bzw. Z'. Gezeigt sind jeweils zwei Objekte 100, 100', wobei das erste Zielobjekt 100 sich in einer grösseren Distanz Z zum Vermessungsgerät 90 befindet als die Distanz 2' zum zweiten Zielobjekt 100' bzw. das gleiche Zielobjekt, einmal in kürzerer Distanz 2' zum Vermessungsgerät 90, einmal in grösserer Distanz 2.

Figur 2a zeigt, wie die vom Vermessungsgerät 90 nacheinander emittierten Lichtpulse 2 bzw. 2' jeweils auf das Zielobjekt 100 bzw. 100' als Lichtfleck oder Abtastpunkt L bzw. L' auftreffen, wobei aufgrund des Verschwenkens bzw. fortlaufenden Änderns der Emissionsrichtung die Lichtflecke L bzw. L' wie dargestellt zueinander versetzt sind. Dieser Versatz ist (bei unveränderter, gleichbleibender Verschwenkgeschwindigkeit) in grösserer Distanz Z grösser als bei der kleineren Distanz Z'. Im Beispiel befindet sich das Zielobjekt 100' dabei derart nahe am Gerät 90 bzw. die Distanz 2' ist derart gering, dass sich die Lichtflecke L' überlappen.

Erfindungsgemäss wird nun, wie in Figur 2b dargestellt, die Anzahl der zur Messung eines Entfernungswerts herangezogenen Lichtpulse 2 bzw. 2' abhängig von der Entfernung eingestellt. Für die grössere Distanz Z (also für das Objekt 100) wird automatisch diese Anzahl niedrig, beispielsweise auf 1, gestellt, d.h. es wird z.B. aus jedem Lichtpuls ein Entfernungswert gemessen oder anders formuliert, pro Lichtpuls ergibt sich ein Scanpunkt P mit zugehörigem Entfernungswert (in der Figur dargestellt als "X").

Für die kleinere Distanz 2' (also für das Objekt 100' bzw. den Nahbereich) wird die Anzahl automatisch auf 2 eingestellt, d.h. aus jeweils zwei (benachbarten) detektierten Lichtpulsen zusammen wird ein Entfernungswert gebildet oder anders formuliert, aus zwei Lichtpulsen ergibt sich ein Scanpunkt P' mit zugehörigem Entfernungswert. Die Menge der Scanpunkte P, P' wird in diesem speziell dargestellten Fall in Bezug auf das Objekt 100' im Vergleich zu einem Scan ohne die erfindungsgemässe automatische Einstellung der Anzahl um den Faktor 2 reduziert, was zugleich eine Datenreduktion bewirkt. Gleichzeitig wird die Sensitivität bzw. das SNR erhöht.

Ein derartiges automatisches Einstellen und Auswerten ist für kleinere Distanzen 2' bzw. im Nahbereich gut möglich, da bedingt durch den Überlapp der Lichtflecke L' bzw. der Lichtpulse 2' ein jeweiliger Lichtpuls 2' nur einen geringen zusätzlichen Informationsgewinn über das Objekt 100' bzw. dessen Entfernung an der jeweiligen Abtaststelle erbringt.

Alternativ zur Darstellung der Figur 2b erfolgt erfindungsgemäss das automatische Einstellen der Anzahl dergestalt, dass die Menge der Scanpunkte P trotz Mittelung beibehalten werden, indem die Akkumulation der Lichtpulse 2 bzw. 2' mittels eines gleitenden statistischen Filters erfolgt. Dabei wird zu einem jedem detektierten Lichtpuls 2 oder 2' bzw. zu jeder Messrichtung jeweils über die automatisch eingestellte Anzahl von benachbarten Lichtpulsen gemittelt, z.B. gemäss den Figuren 2a, 2b über die Anzahl zwei, so dass ein Scanpunkt bzw. ein Entfernungswert aus jeweils zwei Lichtpulsen 2 bzw. 2' resultiert, wobei ein jeder Lichtpuls 2 bzw. 2' sozusagen zweimal verwendet wird, einmal in Kombination mit einem "ersten" Lichtpuls für eine Mittelung zu einem "ersten" Entfernungswert und weiter in Kombination mit einem "zweiten" Lichtpuls für eine weitere Mittelung zum darauffolgenden "zweiten" Entfernungswert. Die Mittelung kann dabei auch eine beispielsweise örtliche Gewichtsfunktion und/oder eine Intensitätsgewichtung umfassen.

Als wesentlicher Vorteil bietet diese erfindungsgemässe Vorgehensweise zum einen eine Erhöhung der Qualität der Scanpunkte P', indem das Distanzrauschen reduziert wird. Zum anderen kann optional die Datenmenge der Scanpunkte reduziert werden, da im Nahbereich ohnehin die Messpunkte gegenseitig oft zu eng zu liegen kommen. Zudem kann damit eine Homogenisierung der Verteilung der Scanpunkte P bzw. P' erreicht werden: durch die Akkumulierung von jeweils zwei detektieren Lichtpulsen 2' zu einem Scanpunkt P' ist der Abstand der Scanpunkte P' des Objekts 100' zueinander gleich oder zumindest ähnlicher demjenigen Abstand der Scanpunkte P des entfernteren Zielobjekts 100 zueinander. D.h. durch das automatische Einstellen der Anzahl in Abhängigkeit der Entfernung kann im Vergleich zum Stand der Technik ein gleichmässigeres Scanpunktraster erzielt werden bzw. sogar ein optimales, uniformes Punkteraster bzw. ein Scanraster, bei dem die Verteilung der Scanpunkte P, P' vollkommen unabhängig von der jeweiligen Messdistanz 2, 2' ist.

Figur 3 stellt eine weitere Ausbildungsform der Erfindung dar. Im oberen Teil der Figur ist eine Objektoberfläche 100 mit Lichtflecken oder Abtastpunkten L der Scanbewegung dargestellt. Die zum Instrument rückgestreuten Lichtpulse werden jeweils auf dem optoelektronischen Detektor detektiert. Die den Lichtpulsen zugeordneten Lichtflecke L weisen einen Radius R auf welcher im wesentlichen dem Radius des Messstrahls entspricht. Die aufeinanderfolgenden detektierten Lichtpulse oder Lichtflecke L weisen einen Abstand D zueinander auf. Dieser laterale Abstand D ist abhängig von der Entfernung zum Objekt, je grösser die Entfernung bzw. Messdistanz desto grösser ist der Abstand D (bei konstanter Verschwenkgeschwindigkeit des Messstrahls). Eine konstante Rotationsgeschwindigkeit insbesondere der schnell drehenden Achse ist von Vorteil, da jede Beschleunigung mit einem erhöhten Leistungsverbrauch verbunden ist. Da die Instrumente oft batteriebetrieben sind, ist ein sparsamer Umgang mit der elektrischen Leistung von Vorteil.

Im Beispiel wird zudem angenommen, dass die Entfernung vergleichsweise gering ist, weshalb der Abstand D vergleichsweise gering ist und die Lichtpulse L sich wie dargestellt vergleichsweise stark überlappen (dies ist natürlich neben der Verschwenkgeschwindigkeit auch abhängig von der Rate, mit der die Lichtquelle des Vermessungsgeräts Impulsfolgen oder Lichtpulse L emittiert). Vorteilhaft ist die Steuer- und Auswerteeinheit ausgebildet um gleichzeitig mehrere Lichtpulse in der Luft identifizieren und verarbeiten zu können (Auflösung von ambiguity).

Bei jedem detektierten Lichtpuls L wird ein Entfernungswert gemessen. Beispielsweise bei schwarzen Zieloberflächen mit schwachem Signal ist das Nutzsignal stark verrauscht, die Distanzmessung ist daher von schlechter Qualität. Mittels des erfindungsgemässen automatisch adaptiven Mittelwertfilters hingegen wird über benachbarte Entfernungswerte gemittelt und dadurch die Qualität des Messergebnisses verbessert. Das Filter wird jeweils von einer Emissionsrichtung zur jeweils nächsten Emissionsrichtung verschoben, der Winkelabstand der Scanpunkte bleibt dabei erhalten und ist distanzunabhängig. Dieses Akkumulationsverfahren reduziert das Distanzrauschen zu jeder Emissionsrichtung 1 (Scanpunkt) wesentlich, insbesondere um den Faktor 1/Wurzel(Anzahl).

Ist das automatisch adaptive Mittelwertfilter hingegen derart konfiguriert, dass die Anzahl der Scanpunkte reduziert wird wie in der Figur 3 dargestellt, dann wird das Scanraster abhängig von der aktuell eingestellten Anzahl herangezogener Entfernungswerte reduziert. Im Nahbereich wird damit ein unnötig dichtes Scanraster verhindert.

Es wird jedenfalls erfindungsgemäss im Zuge des automatischen Einstellens basierend auf der Kenntnis eines aktuell bzw. vor Ort gemessenen Entfernungswerts die Anzahl der zur Entfernungsmessung herangezogenen Lichtpulse L automatisch eingestellt, so dass bei der vorliegenden Entfernung und damit dem vorliegenden seitlichen Abstand D der Lichtpulse L zueinander jeweils vier Lichtpulse L detektorseitig zu einem resultierenden Gesamtpuls G1 bzw. G2 aufsummiert werden und dann jeweils aus einem jeweiligen Gesamtpuls G1 bzw. G2 ein Entfernungswert M1 bzw. M2 bestimmt wird. D.h. aus jeweils vier akkumulierten detektierten Lichtpulsen L ergibt sich -anhand des Entfernungswerts M1 bzw. M2 und der Messung der Emissionsrichtung mit den Positionssensoren- ein Scanpunkt P1 bzw. P2. Dabei resultieren die Scanpunkte P1 und P2 entweder wie in Figur 3 dargestellt aus unterschiedlichen detektierten Lichtpulsen oder teilweise aus den gleichen Lichtpulsen, beispielsweise indem jeweils einer oder zwei der vier Lichtpulse L "ausgewechselt" wird bzw. werden. Mit zunehmender Entfernung zum Zielobjekt 100 und damit zunehmendem räumlichen Abstand D der detektierten Pulse zueinander wird die Anzahl der zu einem Gesamtpuls G1, G2 aufsummierten Einzelpulse L fortwährend reduziert.

Im Beispiel nach Figur 3 ist die Anzahl der aufsummierten Pulse L dabei so gewählt, dass sich ein optimales Scanraster ergibt, indem der Abstand der resultierenden Scanpunkte P1, P2 zueinander durchgehend genauso gross ist wie der effektive Radius R des Messstrahls bzw. eines jeweiligen Lichtpulses. Dadurch wird eine optimale Abdeckung bzw. Rasterung des Zielobjekts 100 erreicht. Die Anzahl der aufsummierten Abtastpunkte kann je nach Anwendung und geforderter Ortsauflösung und Sensitivität eingestellt bzw. angepasst werden.

Das Aufsummieren einer jeweiligen Anzahl von Pulsen L zu einem resultierenden Gesamtpuls G1 bzw. G2 erfolgt beispielsweise bereits empfängerseitig, z.B. indem die digitalisierten Pulse als Zeitsignale sampleweise akkumuliert werden. Erst die Gesamtheit der jeweiligen Anzahl akkumulierter bzw. aufsummierter Pulse wird dann einer Auswertung zur Bestimmung eines Entfernungswerts zugeführt. Mit anderen Worten wird das Time-of-Flight-Messprinzip erst auf den bereitgestellten Gesamtpuls G1 bzw. G2 angewandt. Ein Vorteil der Zusammenfassung einer Anzahl von Pulsen zu einem jeweiligen Gesamtpuls G1 bzw. G2 bereits auf dem Detektor ist, dass selbst bei stark verrauschten Signalen, also einem schlechten SNR, noch ein auswertbarer (Gesamt-)Puls rekonstruierbar ist, da das Rauschen zeitlich unkorreliert, die aufeinanderfolgenden Laserpulse L jedoch reproduzierbar auftreten.

Der zum automatischen Einstellen der Anzahl von der Steuer- und Auswerteeinheit herangezogene Entfernungswert ergibt sich z.B. aus einer vorhergehenden Anzahl detektierter Lichtpulse L und/oder von benachbarten Lichtpulsen L. Im vorliegenden Beispiel wird also z.B. der aus dem Gesamtpuls G1 bestimmte Entfernungswert als Grundlage für das Einstellen der Anzahl der folgenden Lichtpulse L verwendet (im Beispiel wird anhand des Entfernungswerts anhand des Gesamtpuls G1 die Anzahl auf vier festgelegt). Alternativ wird beispielsweise der vorvorherige gemessene Entfernungswert genutzt oder bei zeilenweisem Abtasten des Objekts mit langsamen Verschwenken der vertikalen Achse a1 (s. Figur 1) der bei gleicher Stellung der vertikalen Achse a1 zur vorherigen oder einer der vorherigen Scanzeilen gehörige Entfernungswert.

Es kann für Punktwolken-Auswerteprogramme vorteilhaft sein, wenn die Scanpunkte auf einem regulären Winkelgitter liegen. Dann ist die Reduktion der Anzahl der Punkte wie in Figur 3 dargestellt nicht erwünscht. Um die Anzahl der Scanpunkte beizubehalten, und im Nahbereich, also mit abnehmender Entfernung zum Objekt trotzdem die Anzahl der zu mittelnden Laserpulse zu erhöhen, wird eine gleitende Mittelung (moving average) angewendet. Dabei werden die empfangenen und ADC-gewandelten Zeitsignale wiederum sampleweise akkumuliert, wobei nun mehrere parallele solcher Akkumulatoren im FPGA aktiviert werden, die jeweils um einen Emissionstakt zeitlich verzögert akkumulieren. Im Beispiel von einer Mittelung über vier Emissionsfolgen gibt also beispielsweise nach einer Anzahl von vier Laseremissionen der erste Akkumulator das summierte Zeitsignal der Entfernungsauswerteeinheit weiter, beim nächsten Emissionstakt liefert dann der zweite Akkumulator sein summiertes Zeitsignal, dann der nächste Akkumulator und so weiter. Dadurch bleibt die Anzahl der Scanpunkte erhalten, das heisst jede volle 360Grad-Umdrehung der Scanbewegung hat gleich viele Scanpunkte, und trotzdem ist die Rauschqualität der Punktwolke und die Empfindlichkeit des Scanners wesentlich verbessert. Anstelle des optimalen Scanrasters tritt hier die optimale Wahl der Filterlänge, also die optimale Wahl der Anzahl der aufsummierten Laseremissionen L. Die Anzahl ist optimal gewählt, wenn die Summation im Wesentlichen über Einzelpulse L erfolgt, die quer zur Emissionsrichtung 1 (s. Figur 1) innerhalb eines Strahlradius R platziert sind. Damit wird ein Verschmieren der Objektstrukturen verhindert.

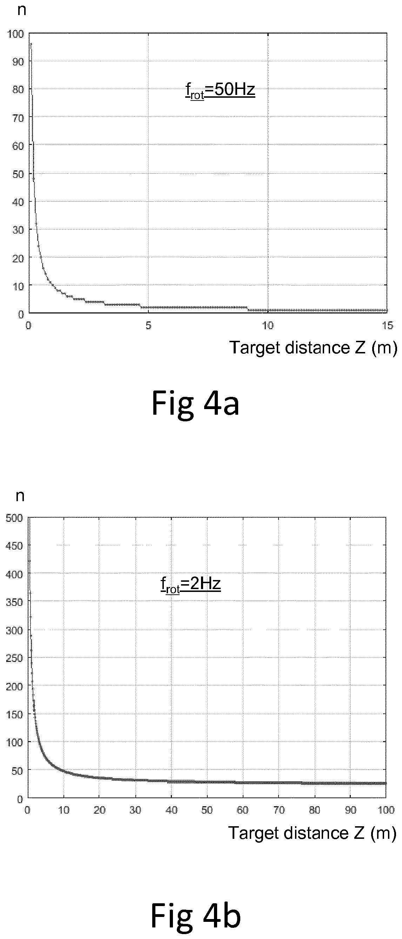

Die Figuren 4a und 4b zeigen zwei Beispiele für ein entfernungswertabhängiges Einstellen der Anzahl n der Lichtpulse, auf der die Messung eines Entfernungswert nach dem ToF-Prinzip basiert. Auf der Rechtsachse ist die Entfernung zum Zielobjekt in Metern angegeben, auf der Hochachse die automatisch entfernungsabhängig eingestellte Anzahl n. Die Unterschiede ergeben sich aufgrund unterschiedlicher Scanparameter für das Vermessungsgerät: in ersten Beispiel nach Fig. 4a ist als Rotationsrate für das Verschwenken der Emissionsrichtung 50Hz angenommen, im zweiten Beispiel nach Fig. 4b 2Hz, bei untereinander gleicher Emissionsrate der Laserpulse. Aufgrund der wesentlich geringeren Verschwenkgeschwindigkeit im zweiten Beispiel der Figur 4b kann eine wesentlich höhere Anzahl von Pulsen herangezogen werden für ein optimales Messergebnis, z. B. ca. 50 Pulse statt nur einem oder zwei Pulsen bei einer Entfernung von ungefähr 10m. Als ein erstes Optimierungskriterium zur Bestimmung der Anzahl n wird letztere maximal so gewählt, dass kein Verwaschen, also keine Glättung von Kanten und Ecken an den zu vermessenden Objektstrukturen auftreten. Innerhalb einer Anzahl n bewegt sich der Messstrahl genau um einen Laserstrahlradius. Natürlich kann das Kriterium «Laserstrahlradius» durch den Benutzer auch selber konfiguriert werden. Als Kriterium kann ein Multiplikationsfaktor zum Laserstrahlradius oder zusätzlich eine Gewichtung der Signalstärke oder des SNR herangezogen werden.

Als ein zweites Optimierungskriterium kann die Uniformität des erzeugten Punktrasters herangezogen werden, also z.B. so, dass das Punktraster unabhängig von der Messdistanz (Kriterium) gewählt wird und dass die Anzahl der Akkumulationen n so gross gewählt wird, dass jeweils bei der Weiterbewegung um den Radius des Lichtpulses bzw. Messstrahls ein Entfernungswert Z gemessen wird. D.h. das Punktraster entspricht dem Radius des Lichtpulses, wie in Figur 3 dargestellt.

Die Diagramme ergeben sich dabei auf folgende Weise:

Das kleinstmögliche Punktraster $D_P$ (Abstand der abgetasteten Punkte) ist durch die Achsendrehgeschwindigkeit und die Lichtschussrate des Vermessungsgeräts vorgegeben:

$$D_P = 2 \pi Z f_{rot} / f_s$$

Mit $f_{rot}$: Rotationsfrequenz der Strahlumlenkeinheit bzw. das Verschwenken; $f_s$: Lichtschussrate; Entfernungswert Z.

Falls als Optimierungskriterium zur Bestimmung der Anzahl n die Erhaltung der Objektstrukturen wesentlich ist, dann kommt die gleitende Akkumulation der Empfangssignale oder der gleitende Mittelwert der Einzeldistanzmessungen zum Tragen. Es tritt keine Glättung von Kanten und Ecken auf, falls die maximale Anzahl n von Lichtemissionsfolgen innerhalb beispielsweise des Laserstrahlradius R liegt:

$$n = (R f_s) / (2 \pi Z f_{rot})$$

Die optimale Anzahl n ist also proportional zur Laserschussfrequenz und umgekehrt-proportional zur Objektentfernung Z. Natürlich kann die Anzahl n auch mit weiteren Kriterien wie der Intensität oder des SNR belegt werden, so dass Abweichungen zu dieser Formel auftreten. Bei ausreichend guten Reflexionssignalen kann n kleiner als der in der Formel angegebene Grenzwert gewählt werden.

Für den Fall von Datenreduktion mittels Zusammenzug einer Anzahl von n Lichtemissionspulsen zu einem oder wenigen Scanpunkten ergibt sich das Mess-Punktraster durch Akkumulation oder Mittelung aus mehreren Einzelmessungen und somit aus einem Vielfachen des kleinstmöglichen Punktrasters $D_p$:

$$D = n D_P$$

Das Scanraster ist in diesem Fall gegenüber dem Messraster $D_P$ um einen Faktor n reduziert. Wird gleichzeitig die langsame Schwenkachse orthogonal zur schnellen Schwenkachse um den Faktor n beschleunigt, dann bleibt das Punktgitter lokal regulär und die effektive Datenmenge reduziert sich quadratisch zum Faktor n.

Der laterale Abstand D der finalen Scanpunkte kann auch mit dem effektiven Messstrahlradius R verglichen werden, dabei wird der Faktor k wie folgt definiert:

$$D = n D_P = k R$$

wobei der Einfachheit wegen nach wie vor Anzahl n als frei wählbarer Parameter verwendet wird. Der Faktor k gibt Auskunft über die Einstellung des Scanpunktrasters in Relation zum effektiven Messstrahlradius R, wobei sich unter Annahme eines auf unendlich fokussierten Emissionsstrahls der effektive Messstrahlradius R in Abhängigkeit der Messdistanz Z und Divergenzwinkel θ aus dem ursprünglichen Messstrahlradius $R_0$ wie folgt ergibt:

$$R = R_0 + Z \tan(\theta)$$

Für verschiedene Zahlenwerte von k ergeben sich folgende Punktraster:

k<1 Das mittels n eingestellte Punktraster ist kleiner als der Radius des Lichtstrahles auf dem Messobjekt. Eine weitere Erhöhung der Anzahl n von akkumulierten Laserpulsen ist noch möglich ohne eine Verschmierung der Messdaten zu bewirken.

k=1 Das Punktraster entspricht dem effektiven Radius des Lichtstrahles.

k=2 Das Punktraster entspricht dem effektiven Durchmesser des Lichtstrahles. Abhängig von der Struktur des Messobjekts und des Laserstrahlprofils könnte bei aktivierter Akkumulation von Laserpulsen eine leichte Verschlechterung der lateralen Objektauflösung auftreten.

k>2 Das Punktraster ist grösser als der Durchmesser des Lichtstrahls, die laterale Ortsauflösung kann bei einer Laserschussakkumulation sichtbar reduziert sein.

Wird das finale Punktraster D dem Messstrahlradius R gleichgesetzt, dann ist k=1 und aus $D = n\, D_P = k\, R$ ergibt sich:

$$n\, Z\, 2\, \pi\, f_{rot} / f_s = R_0 + Z\, \tan(\Theta)$$

und damit:

$$n = [R_0 + Z\, \tan(\Theta)] / [\, Z\, 2\, \pi\, f_{rot} / f_s\, ]$$

was der optimalen Anzahl n von zu mittelnden von Lichtemissionsfolgen entspricht. In der obigen Formel kann n < 1 werden. Falls aber n trotzdem grösser als 1 gesetzt wird, kann es dann zu einer Verschlechterung der lateralen Objektauflösung führen.

Der Performancegewinn bzw. die Reduktion des Distanzrauschens ist proportional zur Wurzel der Akkumulationen sqrt(n), dabei nimmt das optimale n für Dis-tanzen $Z < R_0/\tan(\theta)$ umgekehrt proportional mit kleiner werdender Entfernung zu. Der rechte Term $R_0/\tan(\theta)$ stellt die charakteristische Grenzdistanz Zc dar.

Bei Distanzen Z, die wesentlich grösser sind als $Zc = R_0/\tan(\theta)$ (d.h. der Lichtstrahlradius am Zielobjekt $R \gg R_0$ und $R_0$ somit vernachlässigbar) ist die optimale Anzahl der Akkumulationen:

$$n = f_s\, \tan(\Theta)] / [2\, \pi\, f_{rot}].$$

Die optimale Anzahl n ist in diesem Entfernungsbereich Z>Zc distanzunabhängig.

In diesem Beispiel ergibt sich beispielsweise für eine Verschwenkfrequenz $f_{rot}$=50Hz die optimale Anzahl Akkumulationen: n = 1, für $f_{rot}$ = 2Hz hingegen die opti-male Anzahl n = 24 und insgesamt der in den Graphen der Figuren 4a, 4b dargestellte Verlauf.

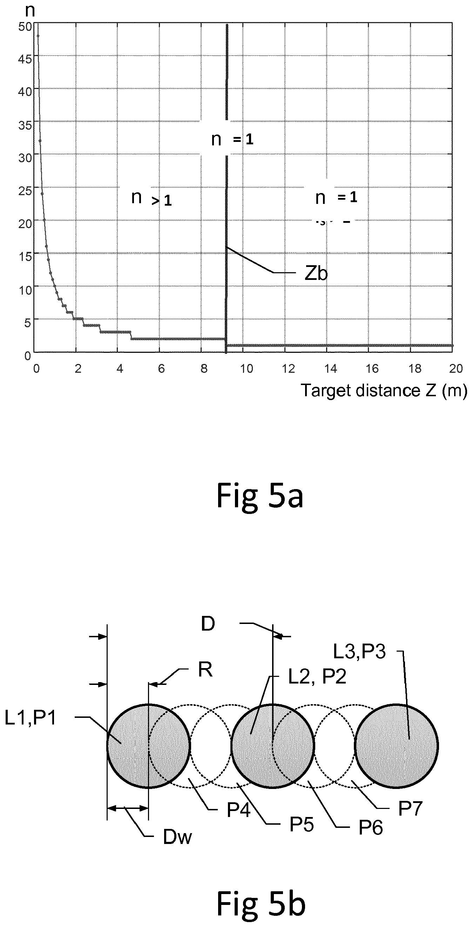

In Figur 5a sind die Grenzen der automatischen Anpassung der Anzahl der Akkumulationen dargestellt. Der Grenzfall ist der Fall, dass n=1 ist, also aus jedem einzelnen Lichtpuls ein Entfernungswert gewonnen wird. Bei Entfernungen Z des Zielobjektes geringer als der zu dieser Anzahl korrespondierenden Maximalentfernung Zb zum Zielobjekt wird erfindungsgemäss durch Erhöhung der Anzahl n, also n>1, die Messpunktqualität verbessert. Bei einem gleitenden Mittelwertfilter wird dabei das Winkelpunktraster beibehalten. Hingegen bei der alternativen Scanner-Einstellung, bei welcher n Distanzmessungen jeweils zu einem Messpunkt zusammengezogen werden, wird das Scanpunktraster konstant gehalten.

Bei Entfernungen Z grösser als diese Grenz- oder Maximaldistanz 2b ist weder eine Verbesserung der Messpunktqualität noch die Einhaltung eines konstanten Scanpunktrasters möglich. Es ist lediglich noch möglich, das Scanpunktwinkelraster konstant zu halten, also wie bei herkömmlichen Laserscannern. In Figur 5b ist ein Ausschnitt aus einem solchen Scanraster für Entfernungen Z zum Zielobjekt grösser als die Grenzdistanz 2b dargestellt (Z>Zb). Optimal bzw. gewünscht wäre ein Scanraster, bei dem der Abstand der Scanpunkte Dw dem Lichtpulsradius R entspricht. Tatsächlich weisen die Lichtpulse L1, L2 und L2 zueinander den Abstand D auf und damit auch die daraus ermittelten Entfernungswerte bzw. Scanpunkte P1, P2 und P3 (da n=1; aus jedem detektierten Lichtpuls wird ein Entfernungswert gemessen). Wie bereits erwähnt kann bei ausreichend grosser Laserschussrate $f_s$ oder langsamer Ablenkgeschwindig-keit $f_{rot}$ die Grenz- oder Maximaldistanz 2b unendlich sein, so dass die optimale Anzahl der Akkumulationen bei allen Distanzen Z grösser als 1 ist.

Als Option weist nun erfindungsgemäss das Vermessungsgerät oder eine damit verbundene, beispielsweise auch zur Fernsteuerung des Vermessungsgeräts ausgebildete Benutzereinheit wie z.B. ein Tablet oder Smartphone ein Benutzerdisplay auf und die Steuer- und Auswerteeinheit ist ausgebildet, auf dem Display eine Warnung anzuzeigen, falls mit den gewählten Scaneinstellungen wie Schussrate, Verschwenkrate oder Messdistanz ein gewähltes oder vorgegebenes Scanraster nicht eingehalten werden kann. Damit kann der Benutzer reagieren und z.B. die Messparameter entsprechend verändern.

In einer erfindungsgemässen Fortbildung ist alternativ oder zusätzlich die Steuer- und Auswerteeinheit des Vermessungsgeräts ausgebildet, nicht nur die Anzahl der für einen Scanpunkt P1-P3 herangezogenen Lichtpulse L1-L3 automatisch einzustellen, sondern zudem auch die emittierte Lichtpulsrate anzupassen. Im Beispiel wird für Entfernungen Z grösser als der maximale Entfernungswert Zb die Laserschussrate automatisch erhöht, und zwar dergestalt, dass sich die zusätzlichen Scanpunkte P4, P5, P6, P7 ergeben und damit das gewünschte optimale Scanraster erzeugt wird. Somit kann das Vermessungsgerät unabhängig vom Benutzer automatisch das Scanraster optimieren und zwar auch für grössere Messreichweiten.

Alternativ oder zusätzlich zu einer entfernungs-wertabhängigen Einstellung der Pulsemissionsrate er-folgt ein derartiges Einstellen abhängig von einer Signalcharakteristik der detektieren Lichtpulse. Beispielsweise wird bei detektierter schwacher Pulsintensität automatisch die Emissionsrate erhöht, so dass z.B. die Anzahl der Aufsummierungen damit höher eingestellt werden kann.

Als weitere Alternative oder Zusatz ist die Steuer- und Auswerteeinheit ausgebildet zur Berücksichti-gung von Augensicherheitsparametern. Da insbesonde-re im Nahbereich, also innerhalb weniger Meter um das Vermessungsgerät, eine Erhöhung der Anzahl n gut möglich ist, wie aus den Figuren 4a,b ersichtlich, wird dies genutzt, um im gleichen Zug die Leistung der Messstrahlung bzw. pro Lichtpuls zu reduzieren und damit die Augensicherheit zu gewährleisten. Mit anderen Worten wird im Nahbereich z.B. die Intensität pro Lichtpuls er-

niedrig, durch eine Erhöhung der Anzahl der aufsummierten Pulse aber gleichzeitig empfängerseitig mittels Akkumulation ein Gesamtpuls erzeugt, der (ungefähr) die gleiche Intensität aufweist wie die Lichtpulse ausserhalb des Nahbereichs, somit also über den gesamten Messbereich eine Konstanz des Signalpegels erzielt, wobei durch die Reduktion der Leistung der einzelnen Pulse die Anforderungen z.B. an die Lasersicherheit leichter erfüllt werden können. Diese sind besonders im Nahbereich wegen zunehmender Bestrahlungsstärke und längerer Verweildauer des Lichtflecks auf dem Auge eines Beobachters hoch, so dass die vorliegende Erfindung hier besonders hohe Vorteile bietet.

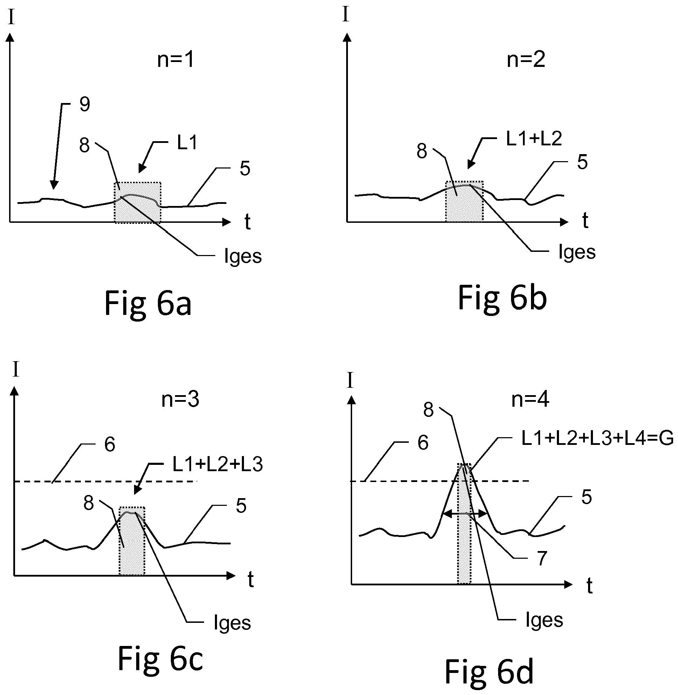

Die Figuren 6a-6d zeigen ein Beispiel für ein erfindungsgemässes automatisches Einstellen der Anzahl basierend auf einer Signalstärke als Messwert. Die Figuren 6a-d stellen jeweils den akkumulierten zeitlichen Signalverlauf 5 (zeitlicher Verlauf der Amplitude des Empfangssignals I) aus einer Anzahl n mit dem Detektor detektierter Lichtpulse dar, wobei in Fig. 6a die Anzahl n gleich eins ist, in Fig. 6b gleich zwei, in Fig. 6c gleich drei und in Fig. 6d gleich vier.

Fig. 6a stellt die Detektion des ersten Lichtpuls L1 dar. Aufgrund des Signalrauschens 9 ist dieser bzw. dessen Intensität $I_{ges}$ kaum auszumachen. In Fig. 6b ist der Signalpegel 5 nach Detektion des darauffolgenden Lichtpulses L2 dargestellt, wobei das Signal $I_{ges}$ zu dem vorherigen der Figur 6a summiert wurde. Dies wird für die beiden folgenden Lichtpulse L3 und L4 fortgeführt (Fig. 6c und Fig. 6d). Da die aufeinanderfolgenden Lichtpulse L1-L4 im Gegensatz zum Rauschanteil 9 zeitlich nicht zufällig verteilt, sondern korreliert sind, "wächst" das Gesamtpulssignal $I_{ges}$ immer weiter an und hebt sich immer mehr vom Rauschen 9 ab. Erfindungsgemäss wird nun z.B. die Signalstärke $I_{ges}$ des detektierten (Gesamt-)Puls zum automatischen Einstellen der Anzahl herangezogen.

Im Beispiel wird hierzu ein Signalstärken- oder Intensitätsschwellwert 6 definiert. Das Aufsummieren der Lichtpulse L1-L4 erfolgt dann solange, bis dieser Schwellwert 6 erreicht oder überschritten wird. In der Situation der Fig. 6c ist dies nicht der Fall, weswegen das Aufsummieren fortgesetzt wird und der nächste detektierte Lichtpuls L4 noch herangezogen wird. Dadurch wird ein Signalpegel des Gesamtpulses G erreicht, der den Schwellwert 6 überschreitet (Fig. 6d). Der Signalstärkenschwellwert 6 ist dabei ein absoluter, fix vorgegebener Wert oder wird abhängig vom ermittelten Rauschpegel 9 eingestellt um beispielsweise ein minimales SNR zu gewährleisten. Mit anderen Worten stellt der Schwellwert 6 ein Kriterium dar, welches festlegt, wann das Aufsummieren beendet wird. Das Einstellen der Anzahl der zur Entfernungsbestimmung herangezogenen Lichtpulse ist also abhängig von einem Stopp- oder Abbruchkriterium, das zu erfüllen ist. Das dabei vorgegebene minimale SNR kann beispielsweise durch einen erforderlichen maximal tolerierten Distanzjitter festgelegt sein.

Alternativ oder zusätzlich wird wie in Fig. 6d als ein solches Kriterium die Pulsbreite 7 verwendet. Das Aufsummieren oder Akkumulieren der detektierten Signale bzw. Lichtpulse erfolgt solange, bis die resultierende Pulsbreite 7 einen vorgegebenen Wert erreicht.

Als weitere Alternative kann als Kriterium das Verhältnis zwischen Pulsflankensteilheit und Signalamplitude des Gesamtpulses verwendet werden. Das Aufsummieren oder Akkumulieren der detektierten Empfangssignale erfolgt solange, bis das Verhältnis einen vorab bestimmten, optional distanzabhängigen, Wert erreicht.

Als weitere Alternative oder Zusatz wird als Abbruchkriterium die Genauigkeit des aus den detektierten Pulsen L1, L2, L3, L4 nach dem Laufzeitprinzip gemessenen Entfernungswerts herangezogen. Aufgrund der grossen Unschärfe 8 des Pulses L1 (Fig. 6a) ergibt sich ein Entfernungswert, der mit einer relativ grossen Unsicherheit behaftet ist. Die Unschärfe 8 und damit die Messunsicherheit oder Messjitter des Entfernungswerts nimmt mit zunehmender Anzahl n fortlaufend ab. In Fig. 6d ist die Unschärfe 8 vergleichsweise klein und damit auch der Fehler des Entfernungswerts. Sobald dieser Fehler oder diese Unsicherheit eine definierte Grenze unterschreitet, wird das Aufsummieren beendet und die Anzahl nicht weiter erhöht, sondern der ermittelte Entfernungswert als endgültiges Messergebnis abgelegt und ein neuer Scanpunkt bzw. ein weiterer Entfernungswert ermittelt. Es kann gezeigt werden, dass bei stochastischem Rauschen die Messunsicherheit oder der Messjitter des Entfernungswerts sich umgekehrt proportional zur Pulsflankensteilheit verhält. Die Parameter SNR und Pulsflankensteilheit sind damit neben der Zielentfernung und Signalintensität weitere Kenngrössen bzw. Signalcharakteristika um die Anzahl n zu bestimmen bzw. automatisch einzustellen.

Neben bzw. zusätzlich zu diesen Abbruchkriterien ist optional eine Obergrenze für die Anzahl als weiteres Abbruchkriterium festgelegt, ab der nicht weiter aufsummiert wird, unabhängig davon, ob eines der ersten Abbruchkriterien erfüllt ist oder nicht. Ist z.B. nach einer bestimmten, vorgegebenen Anzahl von detektierten Pulsen noch immer der Schwellwert 6 nicht erreicht, wird dennoch das Aufsummieren auf dem Detektor abgebrochen, falls möglich aus dem bis dahin erzielten Gesamtpuls G ein Entfernungswert gemessen bzw. ein Scanpunkt ermittelt und die nächste Aufsummierung gestartet.

Als weiteres alternatives oder zusätzliches Stoppkriterium, mit dem die Anzahl eingestellt wird, wird ein Vergleich aufeinanderfolgender gemessener Entfernungswerte verwendet. Dabei wird aus jedem detektierten Lichtpuls L1-L4 ein Entfernungswert abgeleitet. Sobald ein signifikanter Unterschied zwischen diesen Entfernungswerten festgestellt wird, wird das Aufsummieren gestoppt. Eine sprunghafte Veränderung des Entfernungswerts, z.B. um einen Wert von 10mm oder mehr, deutet nämlich z.B. auf eine Ecke oder Kante des Zielobjekts hin, so dass es nicht sinnvoll ist, weitere Pulse zu einem Entfernungswert bzw. Scanpunkt zusammenzufassen, sondern abgebrochen und eine neue Akkumulation gestartet wird.

Neben diesen gezeigten Beispielen kann alternativ auch das Einstellen der Anzahl n abhängig von mehr als einem zielobjektbezogenen Messwert erfolgen, z.B. abhängig von einem Entfernungswert und der Signalintensität, so dass beispielsweise für einen bestimmten Messbereich, also ein Intervall definierter Entfernungswerte eine relativ geringe Anzahl, z.B. ein oder zwei Lichtpulse, als Anzahl herangezogen wird, es sei denn, es wird eine geringe Signalintensität gemessen, die beispielsweise unterhalb einer festgelegten Mindestintensität liegt. Dann wird die Anzahl automatisch erhöht, entweder bis ein gewisser Schwellwert bzw. ein Abbruchkriterium erfüllt ist oder bis zu einer fixen Anzahl. Beispielsweise wird also die Anzahl anstelle auf zwei auf 8 Pulse eingestellt oder solange erhöht, bis eine ausreichende Signalintensität des resultierenden Gesamtpulses festgestellt wird. Damit können z.B. schwach reflektierende Zielobjekte mit reduzierter Messunsicherheit vermessen werden, stärker reflektierende Ziele im gleichen Entfernungsbereich dagegen mit erhöhter Auflösung (höhere Anzahl von Scanpunkten pro Fläche da geringere Anzahl aufsummierter Lichtpulse).

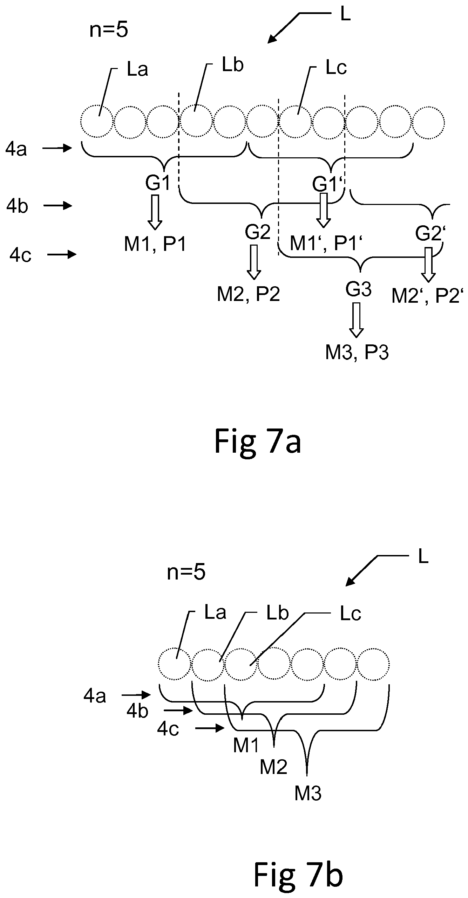

Die Figuren 7a, b stellen eine weitere Fortbildung der Erfindung dar. Hierbei ist die Steuer- und Auswerteeinheit des Vermessungsgeräts dergestalt ausgebildet, dass parallel und versetzt mehrere Aufsummierungen 4a, 4b, 4c erfolgen. Im Beispiel ist dabei die Anzahl n der für einen jeweiligen Entfernungswert herangezogenen Lichtpulse jeweils gleich fünf.

In Figur 7a ist dargestellt, wie ausgehend von einem ersten Startpuls La die erste Folge 4b von Aufsummierungen gestartet wird, so dass aus den ersten fünf aufeinanderfolgenden Lichtpulsen inklusive dem Startpuls La ein erster Gesamtpuls G1 resultiert, basierend auf welchem ein erster Entfernungswert M1 durch Laufzeitmessung bestimmt wird. Aus den fünf dann folgenden Lichtpulsen resultiert der zweite Gesamtpuls G1' und zweite Entfernungswert M1' usw. Parallel dazu wird ausgehend vom zweiten Startpuls Lb (der der vierte detektierte Lichtpuls ausgehend vom ersten Startpuls La ist) ein zweiter Aufsummierungsvorgang 4b gestartet, der im Gesamtpuls G2 und darauf folgend G2' usw. resultiert, wobei auch hier jeweils fünf Pulse akkumuliert werden. Schliesslich wird ausgehend von einem dritten Startpuls Lc eine dritte Folge 4c von Aussummierungen durchgeführt, resultierend im Gesamtpuls G3 usw. Basierend auf diesen Gesamtpulsen G1-G3 liegen dann die gemessenen Entfernungswerte M1, M2, M1', M3, M2' usw. vor und damit zusammen mit der zugehörigen Richtungsinformation über die Richtung der Messachse bzw. Lichtpulsemission die Reihenfolge der entsprechenden Scanpunkte P1, P2, P1', P3, P2'.

Diese teilüberlappenden parallelen Vorgänge bieten u.a. den Vorteil, dass eine Glättung über die abgetasteten Punkte erzielbar ist. Auch kann die Anzahl n für jeweilig parallel ablaufende Aufsummierungsvorgänge variieren, so dass z.B. eine erster Vorgang 4a eine messwertabhängige erste Anzahl n aufweist und ein zweiter Vorgang 4b eine zweite messwertabhängige Anzahl, z.B. 3n, wobei zusätzlich Kriterien wie das Auftreten einer Ecke oder Kante wie oben dargestellt berücksichtigt werden können. Die Anzahl der Akkumulationen wird weiter optional automatisch abhängig von der Lichtpunktgrösse oder effektiven Radius bzw. Entfernung eingestellt, so dass beispielsweise für kleinere Laserpunkte oder grössere Entfernungen von der dargestellten Anzahl fünf automatisch auf die Anzahl vier oder weniger umgestellt wird. Dies kann sukzessive erfolgen, so dass z.B. in einem ersten Bereich, der am nächsten am Vermessungsgerät liegt, die Anzahl fünf vorliegt, in einem angrenzenden etwas weiter entfernten Bereich die Anzahl vier usw. bis zur Reduktion der Anzahl auf eins in einem äussersten Bereich.

Als eine Option wird dabei erfindungsgemäss jeder einzelne der aufeinanderfolgenden abgetasteten Punkte bzw. detektierten Lichtpulse als Startpunkt herangezogen, wie dies in Figur 7b dargestellt ist, so dass die grösstmögliche Überlappung vorliegt. Hier sind jeweils aufeinanderfolgende Lichtpulse La, Lb, Lc Ausgangspunkt einer Mittelung, der Lichtpuls La für die Folge 4a, Lichtpuls Lb für die Folge 4b, Lichtpuls Lc für die Folge 4c usw. Aus der ersten Anzahl von fünf Lichtpulsen ausgehend vom Lichtpuls La resultiert der erste Entfernungswert M1, aus der zweiten Anzahl der zweiten Folge 4b der zweite Entfernungswert M2 usw. D.h. jeweils der erste Lichtpuls einer Folge 4a-4c wird durch den jeweils nächsten Lichtpuls ersetzt, das Mittelungsfenster wird jeweils einen Puls "weitergeschoben", das Mittelungsfenster gleitet über die Pulsabfolge. So wird eine Glättung bei maximal dichtem Scanraster erzeugt. Alternativ kann eine gleitende Mittelung rein digital auf den von einzelnen Lichtpulsen ermittelten Entfernungen abgeleitet werden. Dabei wird von jedem Lichtpuls separat eine Entfernung berechnet. Diese Entfernungen können dann je nach Benutzerkonfiguration zu Scanpunkten aggregiert werden, also auch entsprechend eines moving average Filters. Dies bietet den Vorteil einer erhöhten Sensitivität unter gleichzeitiger Beibehaltung einer hohen bzw. nicht reduzierten Punktdichte.

Es versteht sich, dass diese dargestellten Figuren nur mögliche Ausführungsbeispiele schematisch darstellen. Die verschiedenen Ansätze können erfindungsgemäss ebenso miteinander sowie mit Vermessungsgeräten und Vermessungsverfahren des Stands der Technik kombiniert werden.

**Patentansprüche**

1. Opto-elektronisches Vermessungsgerät (90) mit Scanfunktionalität, insbesondere Laserscanner, Lasertracker, Laserprofiler oder Totalstation, mit

• einer Pulsstrahlungsquelle, insbesondere einer Pulslaserquelle, zur Erzeugung eines Messstrahls (91) aus Lichtpulsen (2, 2", L, L1-L4, La-Lc) mit einer Lichtpulsemissionsrate,
• einer Optik zur Emission der Lichtpulse (2, 2', L, L1-L4, La-Lc) in den freien Raum auf ein Zielobjekt (100, 100'),
• einem Strahlumlenker zur Variation der Emissionsrichtung (1) der Lichtpulse (2, 2', L, L1-L4, La-Lc) um wenigstens eine Achse (a1, a2), insbesondere zwei zueinander rechtwinklige Achsen, dergestalt, dass eine scannende Abtastung des Zielobjekts (100) ausführbar ist, wobei ein Scanraster (3) aus Scanpunkten (P, P', P1', P2', P1-P7) gebildet wird,
• wenigstens einen Positions- oder Winkelsensor zur Messung der Emissionsrichtung (1),
• einem opto-elektronischen Detektor zur Detektion von vom Zielobjekt (100, 100') reflektierten Lichtpulsen (2, 2', L, L1-L4, La-Lc),
• einer Steuer- und Auswerteeinheit ausgebildet zur Messung eines Entfernungswerts (Z, Z', M1-M3) zu einem jeweiligen Scanpunkt (P, P', P1', P2', P1-P7) des Zielobjekts (100, 100') nach dem Time-of-Flight-Prinzip, wobei zur Messung eine Anzahl n>=1 detektierter Lichtpulse (2, 2', L, L1-L4, La-Lc) herangezogen wird,

wobei die Steuer- und Auswerteeinheit ausgebildet ist zur automatischen Einstellung der Anzahl (n) der zur Messung herangezogenen Lichtpulse (2, 2', L, L1-L4, La-Lc) abhängig von wenigstens einem vom Vermessungsgerät (90) in Echtzeit ermittelten, zielobjektbezogenen Messwert (Z, Z', M1-M3, $I_{ges}$), **dadurch gekennzeichnet, dass** die Anzahl (n) anhand des zielobjektbezogenen Messwerts (Z, Z', M1-M3, $I_{ges}$) automatisch, flexibel und in Echtzeit an die Messsituation angepasst wird.

2. Vermessungsgerät (90) nach Anspruch 1,
**dadurch gekennzeichnet, dass**
der zielobjektbezogene Messwert (Z, Z', M1-M3, $I_{ges}$) ein Entfernungswert (Z, Z', M1-M3) zum Zielobjekt (100, 100') ist und/oder eine Signalcharakteristik, insbesondere Signalstärke ($I_{ges}$), eines oder mehrerer detektierter Lichtpulse (2, 2', L, L1-L4, La-Lc) ist.

3. Vermessungsgerät (90) nach Anspruch 1 oder 2,
**dadurch gekennzeichnet, dass**
die Steuer- und Auswerteeinheit dergestalt ausgebildet ist, dass, insbesondere mittels wenigstens eines definierten absoluten oder relativen Grenzwerts (Zb, 6) für den zielobjektbezogenen Messwert (Z, Z', M1-M3, $I_{ges}$), die Anzahl (n) herangezogener Lichtpulse (2, 2', L, L1-L4, La-Lc) derart automatisch einstellbar ist, dass wenigstens ein erster Scanbereich mit einer im Vergleich zu einem zweiten Scanbereich erhöhten Anzahl (n) vorliegt, insbesondere wobei der Messwert ein Entfernungswert (Z, Z', M1-M3) ist und der erste Bereich für Entfernungswerte (Z, Z', M1-M3) unterhalb einer Maximalentfernung (Zb) vorliegt.

4. Vermessungsgerät (90) nach Anspruch 3,
**gekennzeichnet durch**
die Steuer- und Auswerteeinheit dergestalt ausgebildet ist, dass zumindest für den ersten Scanbereich die Messung eines jeweiligen Entfernungswerts (Z, Z', M1-M3) basiert auf einer Mittelung über eine Anzahl n>=2 herangezogener Lichtpulse (2, 2', L, L1-L4, La-Lc), entweder mittels

• dem Prinzip der gleitenden Mittelung, so dass die Zahl der Scanpunkte (P, P', P1', P2', P1-P7) unabhängig von der eingestellten Anzahl herangezogener Lichtpulse (2, 2', L, L1-L4, La-Lc) ist, oder
• einer die Zahl der Scanpunkte (P, P', P1', P2', P1-P7) reduzierenden Mittelung.

5. Vermessungsgerät (90) nach einem der vorhergehenden Ansprüche,
**dadurch gekennzeichnet, dass**
die automatische Einstellung der Anzahl (n) erfolgt, indem der Detektor und die Steuer- und Auswerteeinheit ausgebildet sind zur detektorseitigen Aufsummierung einer Anzahl n>=1 aufeinanderfolgender detektierter Lichtpulse (2, 2', L, L1-L4, La-Lc) zu einem resultierenden Gesamtpuls (G, G1-G3, G1', G2') und zur Messung eines Entfernungswerts (Z, Z', M1-M3) zum Zielobjekt (100, 100') durch Anwendung des Time-of-Flight-Prinzips auf den resultierenden Gesamtpuls (G, G1-G3, G1', G2').

6. Vermessungsgerät (90) nach Anspruch 5,
**dadurch gekennzeichnet, dass**
die Aufsummierung solange erfolgt, bis der resultierende Gesamtpuls (G, G1-G3, G1', G2') ein vorgegebenes, an den zielobjektbezogenen Messwert (Z, Z', M1-M3, $I_{ges}$) gebundenes Abbruchkriterium erfüllt, insbesondere wobei

• das Abbruchkriterium ein zu überschreitender, im Speziellen untergrundabhängiger, Signalstärkenschwellwert (6) ist und/oder
• das Abbruchkriterium eine zu unterschreitende Fehlergrenze (8) des basierend auf dem resultierenden Gesamtpuls (G, G1-G3, G1', G2') gemessenen Entfernungswerts (Z, Z', M1-M3) ist und/oder
• der zielobjektbezogene Messwert ein Entfernungswert (Z, Z', M1-M3) zum Zielobjekt (100, 100') und das Abbruchkriterium eine sprunghafte Änderung des Entfernungswerts (Z, Z', M1-M3) ist.

**7.** Vermessungsgerät (90) nach Anspruch 5 oder 6, **dadurch gekennzeichnet, dass**

ausgehend von unterschiedlichen Startpulsen (La, Lb, Lc) parallel mehrere detektorseitige Aufsummierungsvorgänge einer jeweiligen Anzahl detektierter Lichtpulse (2, 2', L, L1-L4, La-Lc) erfolgen.

**8.** Vermessungsgerät (90) nach einem der Ansprüche 1 bis 7, **dadurch gekennzeichnet, dass**

der zielobjektbezogene Messwert (Z, Z', M1-M3, I_{ges}) ein Entfernungswert (Z, Z', M1-M3) zum Zielobjekt (100, 100') ist, welcher durch eine vorhergehende lichtpulsbasierte Messung bestimmt wurde, insbesondere indem bei zeilenweiser scannender Abtastung derjenige Entfernungswert (Z, Z', M1-M3) aus einer der vorigen Scanzeilen herangezogen wird, welcher der zur jeweilig vorliegenden Emissionsrichtung (1) benachbarten Emissionsrichtung entspricht.

**9.** Vermessungsgerät (90) nach einem der Ansprüche 1 bis 7, **dadurch gekennzeichnet, dass**

das Vermessungsgerät (90) einen Grobentfernungsmesser aufweist zur Bestimmung eines Grobentfernungswerts zum Zielobjekt (100, 100') und die Steuer- und Auswerteeinheit ausgebildet ist zur automatischen Einstellung der Anzahl (n) abhängig von einer vom Grobentfernungsmesser gemessenen Entfernungswerts als zielobjektbezogener Messwert (Z, Z', M1-M3), insbesondere wobei der Grobdistanzmesser ausgebildet ist als

- RIM-Kamera,
- Elektronischer Distanzmesser,
- Stereokamera,
- Lichtfeldkamera oder
- Kamera zur Distanzbestimmung mittels Bildverarbeitung.

**10.** Vermessungsgerät (90) nach einem der Ansprüche 8 oder 9, **dadurch gekennzeichnet, dass**

die Steuer- und Auswerteeinheit ausgebildet ist zur automatischen Erhöhung der Anzahl (n) herangezogener Lichtpulse (2, 2', L, L1-L4, La-Lc) und zur damit verknüpften und darauf abgestimmten Reduktion der Leistung des emittierten Messstrahls (91) für Entfernungswerte (Z, Z', M1-M3) unterhalb eines definierten Grenzentfernungswerts im Vergleich zu Entfernungswerten (Z, Z', M1-M3) oberhalb des Grenzentfernungswerts, insbesondere wobei es sich bei dem Grenzentfernungswert um den Nominellen Augen-Gefahrenabstand handelt.

**11.** Vermessungsgerät (90) nach einem der Ansprüche 8 bis 10,

**dadurch gekennzeichnet, dass**

die Steuer- und Auswerteeinheit ausgebildet ist zur automatischen Einstellung der Anzahl (n) dergestalt, dass das Scanraster (3) angepasst an den effektiven Radius (R) des Messstrahls (91) gebildet ist, wobei eine Entfernungsabhängigkeit des effektiven Radius (R) berücksichtigt wird, insbesondere wobei

die automatische Einstellung der Anzahl (n) dergestalt erfolgt, dass der Abstand aufeinanderfolgender Scanpunkte (P, P', P1', P2', P1-P7) dem effektiven Radius (R) des Messstrahls (91) oder einem wählbaren Bruchteil oder Vielfachen des effektiven Radius (R) des Messstrahls (91) entspricht, zumindest für Scanpunkte (P, P', P1', P2', P1-P7), deren zugehöriger Entfernungswert (Z, Z', M1-M3) nicht grösser als ein Maximalentfernungswert ist.

**12.** Vermessungsgerät (90) nach einem der vorherigen Ansprüche, **dadurch gekennzeichnet, dass**

die Steuer- und Auswerteeinheit ausgebildet ist zur

- automatischen Einstellung der Laserpulsemissionsrate abhängig von einem vom Vermessungsgerät (90) in Echtzeit ermittelten, zielobjektbezogenen Messwert (Z, Z', M1-M3, I_{ges}), insbesondere Entfernungswert (Z, Z', M1-M3), insbesondere wobei die Steuer- und Auswerteeinheit ausgebildet ist, gleichzeitig mehrere Lichtpulse (2, 2', L, L1-L4, La-Lc) in der Luft zu identifizieren und zu verarbeiten, und/oder
- Ausgabe eines Benutzerhinweises auf einem Benutzerdisplay, wobei der Benutzerhinweis anzeigt, ob ein gewünschtes Scanraster (3) für vorliegende Messparameter, insbesondere Lichtpulsemissionsrate, Geschwindigkeit der Emissionsrichtungsvariation und/oder Messreichweite, bildbar ist.

**13.** Vermessungsgerät (90) nach Anspruch 11 und 12, **dadurch gekennzeichnet, dass**

die Steuer- und Auswerteeinheit ausgebildet ist zur automatischen Einstellung der Laserpulsemissionsrate derart abgestimmt auf die Einstellung der Anzahl (n) herangezogener Lichtpulse (2, 2', L, L1-L4, La-Lc), dass der messstrahlradiusabhängige Abstand (D) aufeinanderfolgender Scanpunkte (2, 2', L, L1-L4, La-Lc) entfernungsunabhängig gewährleistet ist.

**14.** Opto-elektronisches Messverfahren zum optischen Abtasten eines Zielobjekts (100, 100') mit

- Emittieren eines gepulsten Messstrahls (91) auf das abzutastende Zielobjekt (100, 100') mit Variation der Emissionsrichtung (1) der Lichtpulse (2, 2', L, L1-L4, La-Lc) um wenigstens eine Achse (a1, a2), insbesondere zwei zueinander rechtwinklige Achsen, dergestalt, dass eine scannende Abtastung des Zielobjekts (100, 100') ausführbar ist, wobei ein Scanraster (3) aus Scanpunkten (P, P', P1', P2', P1-P7) gebildet wird,
• Messen der Emissionsrichtung (1),
• Detektieren von vom Zielobjekt (100, 100') reflektierten Lichtpulsen (2, 2', L, L1-L4, La-Lc),
• Messen eines Entfernungswerts (Z, Z', M1-M3) zu einem jeweiligen Scanpunkt P, P', P1', P2', P1-P7) des Zielobjekts (100, 100') nach dem Time-of-Flight-Prinzip, wobei zur Messung eine Anzahl n>=1 detektierter Lichtpulse (2, 2', L, L1-L4, La-Lc) herangezogen wird, und
• automatischem Einstellen der Anzahl (n) der zur Messung herangezogenen Lichtpulse (2, 2', L, L1-L4, La-Lc) abhängig von einem in Echtzeit ermittelten, zielobjektbezogenen Messwert (Z, Z', M1-M3, $I_{ges}$), **dadurch gekennzeichnet, dass**

die Anzahl (n) anhand des aktuellen Messwerts (Z, Z', M1-M3, $I_{ges}$) automatisch, flexibel und in Echtzeit an die Messsituation angepasst wird.

15. Computerprogrammprodukt, das auf einem maschinenlesbaren Träger gespeichert ist, oder Computer-Datensignal, verkörpert durch eine elektromagnetische Welle, mit Programmcode, zur Steuerung bzw. Durchführung des Verfahrens nach Anspruch 14, wenn das Programm in einer Steuer- und Auswerteeinheit eines Vermessungsgeräts (90) gemäss Anspruch 1 ausgeführt wird.

**Claims**

1. Optoelectronic measuring device (90) having scanning functionality, in particular a laser scanner, laser tracker, laser profiler, or total station, having

   • a pulsed radiation source, in particular a pulsed laser source, for generating a measuring beam (91) from light pulses (2, 2", L, L1-L4, La-Lc) at a light pulse emission rate,
   • an optical unit for emitting the light pulses (2, 2', L, L1-L4, La-Lc) into free space onto a target object (100, 100'),
   • a beam deflector for varying the emission direction (1) of the light pulses (2, 2', L, L1-L4, La-Lc) about at least one axis (a1, a2), in particular two axes perpendicular to one another, in such a way that scanning sampling of the target object (100) is executable, wherein a scanning grid (3) is formed from scanning points (P, P', P1', P2', P1-P7),
   • at least one position or angle sensor for measuring the emission direction (1),
   • an optoelectronic detector for detecting light pulses (2, 2', L, L1-L4, La-Lc) reflected from the target object (100, 100'),
   • a control and analysis unit designed for measuring a distance value (Z, Z', M1-M3) from a respective scanning point (P, P', P1', P2', P1-P7) of the target object (100, 100') according to the time-of-flight principle, wherein a number n>=1 of detected light pulses (2, 2', L, L1-L4, La-Lc) is used for the measurement,
   whereby the control and analysis unit is designed for automatically setting the number (n) of the light pulses (2, 2', L, L1-L4, La-Lc) used for the measurement in dependence on at least one target-object-related measured value (Z, Z', M1-M3, $I_{ges}$) determined by the measuring device (90) in real time,
   **characterized in that**
   the number (n) is adapted in real time, flexibly and automatically to presently existing measuring conditions on the basis of the target-object-related measured value (Z, Z', M1-M3, $I_{ges}$).

2. Measuring device (90) according to Claim 1,
   **characterized in that**
   the target-object-related measured value (Z, Z', M1-M3, $I_{ges}$) is a distance value (Z, Z', M1-M3) to the target object (100, 100') and/or is a signal characteristic, in particular a signal strength ($I_{ges}$), of one or more detected light pulses (2, 2', L, L1-L4, La-Lc).

3. Measuring device (90) according to Claim 1 or 2,
   **characterized in that**
   the control and analysis unit is designed in such a way that, in particular by means of at least one defined absolute or relative limiting value (Zb, 6) for the target-object-related measured value (Z, Z', M1-M3, $I_{ges}$), the number (n) of light pulses (2, 2', L, L1-L4, La-Lc) used is automatically settable in such a way that at least one first scanning range having an increased number (n) in comparison to a second scanning range is provided, in particular wherein the measured value is a distance value (Z, Z', M1-M3) and the first range is provided for distance values (Z, Z', M1-M3) below a maximum distance (Zb).

4. Measuring device (90) according to Claim 3,
   **characterized by**
   the control and analysis unit being designed in such a way that, at least for the first scanning range, the measurement of a respective distance value (Z, Z', M1-M3) is based on averaging over a number n>=2 of light pulses (2, 2', L, L1-L4, La-Lc) used, either by means of

• the principle of moving averaging, so that the number of the scanning points (P, P', P1', P2', P1-P7) is independent of the set number of light pulses (2, 2', L, L1-L4, La-Lc) used, or
• averaging reducing the number of the scanning points (P, P', P1', P2', P1-P7).

5. Measuring device (90) according to any one of the preceding claims,
**characterized in that**
the automatic setting of the number (n) is performed by the detector and the control and analysis unit being designed for the detector-side summation of a number n>=1 of successively detected light pulses (2, 2', L, L1-L4, La-Lc) to form a resulting total pulse (G, G1-G3, G1', G2') and for the measurement of a distance value (Z, Z', M1-M3) from the target object (100, 100') by applying the time-of-flight principle to the resulting total pulse (G, G1-G3, G1', G2').

6. Measuring device (90) according to Claim 5,
**characterized in that**
the summation is performed until the resulting total pulse (G, G1-G3, G1', G2') fulfills a specified termination criterion linked to the target-object-related measured value (Z, Z', M1-M3, $I_{ges}$), in particular wherein

• the termination criterion is a signal strength threshold value (6) to be exceeded, which is especially dependent of the background noise, and/or
• the termination criterion is an error limit (8) to be undershot by the distance value (Z, Z', M1-M3) measured based on the resulting total pulse (G, G1-G3, G1', G2'), and/or
• the target-object-related measured value is a distance value (Z, Z', M1-M3) to the target object (100, 100') and the termination criterion is a sudden change of the distance value (Z, Z', M1-M3).

7. Measuring device (90) according to Claim 5 or 6,
**characterized in that**
proceeding from different starting pulses (La, Lb, Lc), multiple detector-side summation procedures of a respective number of detected light pulses (2, 2', L, L1-L4, La-Lc) take place in parallel.

8. Measuring device (90) according to any one of Claims 1 to 7,
**characterized in that**
the target-object-related measured value (Z, Z', M1-M3, $I_{ges}$) is a distance value (Z, Z', M1-M3) from the target object (100, 100'), which was determined by a preceding light-pulse-based measurement, in particular by using, in the case of line-by-line scanning sampling, the distance value (Z, Z', M1-M3) from one of the preceding scanning lines which corresponds to the emission direction adjacent to the respective present emission direction (1).

9. Measuring device (90) according to any one of Claims 1 to 7,
**characterized in that**
the measuring device (90) has a rough distance meter for determining a rough distance value from the target object (100, 100') and the control and analysis unit is designed to automatically set the number (n) in dependence on a distance value measured by the rough distance meter as a target-object-related measured value (Z, Z', M1-M3), in particular wherein the rough distance meter is designed as a

• RIM camera,
• electronic distance meter,
• stereo camera,
• light field camera, or
• camera for distance determination by means of image processing.

10. Measuring device (90) according to any one of Claims 8 or 9,
**characterized in that**
the control and analysis unit is designed for the automatic increase of the number (n) of light pulses (2, 2', L, L1-L4, La-Lc) used and for the reduction, which is linked and adapted thereto, of the power of the emitted measuring beam (91) for distance values (Z, Z', M1-M3) below a defined limiting distance value in comparison to distance values (Z, Z', M1-M3) above the limiting distance value, in particular wherein the limiting distance value is the nominal ocular hazard distance.

11. Measuring device (90) according to any one of Claims 8 to 10,
**characterized in that**
the control and analysis unit is designed for the automatic setting of the number (n) in such a way that the scanning grid (3) is formed adapted to the effective radius (R) of the measuring beam (91), wherein a distance dependence of the effective radius (R) is taken into consideration, in particular wherein the automatic setting of the number (n) is performed in such a way that the spacing of successive scanning points (P, P', P1', P2', P1-P7) corresponds to the effective radius (R) of the measuring beam (91) or a selectable fraction or multiple of the effective radius (R) of the measuring beam (91), at least for scanning points (P, P', P1', P2', P1-P7), the associated distance value (Z, Z', M1-M3) of which is not greater than a maximum distance value.

12. Measuring device (90) according to any one of the preceding claims,
**characterized in that**

the control and analysis unit is designed for

• automatically setting the laser pulse emission rate in dependence on a target-object-related measured value (Z, Z ', M1-M3, $I_{ges}$) determined by the measuring device (90) in real time, in particular a distance value (Z, Z', M1-M3), in particular wherein the control and analysis unit is designed to identify and process multiple light pulses (2, 2', L, L1-L4, La-Lc) in the air simultaneously, and/or

• outputting a user notification on a user display screen, wherein the user notification indicates whether a desired scanning grid (3) can be formed for the present measuring parameters, in particular light pulse emission rate, speed of the emission direction variation, and/or measuring range.

13. Measuring device (90) according to Claims 11 and 12,
**characterized in that**
the control and analysis unit is designed for automatically setting the laser pulse emission rate adapted to the setting of the number (n) of light pulses (2, 2', L, L1-L4, La-Lc) used in such a way that the measuring-beam-radius-dependent spacing (D) of successive scanning points (2, 2', L, L1-L4, La-Lc) is ensured independently of distance.

14. Optoelectronic measuring method for optically sampling a target object (100, 100') comprising

• emitting a pulsed measuring beam (91) onto the target object (100, 100') to be sampled with variation of the emission direction (1) of the light pulses (2, 2', L, L1-L4, La-Lc) about at least one axis (a1, a2), in particular two axes perpendicular to one another, in such a way that scanning sampling of the target object (100, 100') is executable, wherein a scanning grid (3) is formed from scanning points (P, P', P1', P2', P1-P7),

• measuring the emission direction (1),

• detecting light pulses (2, 2', L, L1-L4, La-Lc) reflected from the target object (100, 100'),

• measuring a distance value (Z, Z', M1-M3) from a respective scanning point (P, P', P1', P2', P1-P7) of the target object (100, 100') according to the time-of-flight principle, wherein a number n>=1 of detected light pulses (2, 2', L, L1-L4, La-Lc) is used for the measurement,

• automatic setting of the number (n) of the light pulses (2, 2', L, L1-L4, La-Lc) used for the measurement in dependence on a target-object-related measured value (Z, Z', M1-M3, $I_{ges}$) determined in real time

**characterized in that**

the number (n) is adapted in real time, flexibly and automatically to presently existing measuring conditions on the basis of the target-object-related measured value (Z, Z', M1-M3, $I_{ges}$).

15. Computer program, which is stored on a machine-readable carrier, or computer data signal, embodied by an electromagnetic wave, having program code, for controlling and/or carrying out the method according to Claim 14 when the program is executed in a control and analysis unit of a measuring device (90) according to Claim 1.

**Revendications**

1. Appareil de mesure optoélectronique (90) à fonctionnalité de balayage, en particulier scanner laser, traceur laser, profileur laser ou station totale, avec

• une source de rayonnement pulsé, en particulier une source laser à impulsions, pour produire un rayon de mesure (91) constitué d'impulsions de lumière (2 , 2", L, L1-L4, La-Lc) avec un taux d'émission d'impulsions de lumière,

• une optique pour l'émission des impulsions de lumière (2 , 2", L, L1-L4, La-Lc) dans l'espace libre sur un objet cible (100, 100'),

• un déflecteur de faisceau pour la variation de la direction d'émission (1) des impulsions de lumière (2 , 2", L, L1-L4, La-Lc) autour d'au moins un axe (a1, a2), en particulier deux axes perpendiculaires l'un à l'autre, de telle manière qu'un balayage scannant de l'objet cible (100) peut être exécuté, cependant qu'une grille de balayage (3) est formée de points de balayage (P, P', P1', P2', P1-P7),

• au moins un détecteur de position ou d'angle pour la mesure de la direction d'émission (1),

• un détecteur optoélectronique pour la détection d'impulsions de lumière (2 , 2", L, L1-L4, La-Lc) réfléchies par l'objet cible (100, 100'),

• une unité de commande et d'évaluation configurée pour la mesure d'une valeur de distance (Z, Z', M1-M3) avec un point de balayage respectif (P, P', P1', P2', P1-P7) de l'objet cible (100, 100') selon le principe du temps de vol, cependant qu'un nombre n>=1 d'impulsions de lumière détectées (2 , 2", L, L1-L4, La-Lc) est utilisé pour la mesure,

cependant que l'unité de commande et d'évaluation est configurée pour le réglage automatique du nombre (n) des impulsions de lumière (2 , 2", L, L1-L4, La-Lc) utilisées pour la mesure en fonction d'au moins une valeur de mesure spécifique à l'objet cible (Z, Z', M1-M3, $I_{ges}$), détectée en temps réel par l'appareil de mesure (90),

**caractérisé en ce que**
le nombre (n) est adapté automatiquement, de manière flexible et en temps réel à la situation de mesure à l'aide de la valeur de mesure spécifique à l'objet cible (Z, Z', M1-M3, $I_{ges}$).

2. Appareil de mesure (90) selon la revendication 1, **caractérisé en ce que** la valeur de mesure spécifique à l'objet cible (Z, Z', M1-M3, $I_{ges}$) est une valeur de distance (Z, Z', M1-M3) avec l'objet cible (100, 100') et/ou est une caractéristique de signal, en particulier l'intensité du signal ($I_{ges}$) d'une ou de plusieurs impulsions de lumière détectées (2 , 2", L, L1-L4, La-Lc).

3. Appareil de mesure (90) selon la revendication 1 ou 2, **caractérisé en ce que** l'unité de commande et d'évaluation est configurée de telle manière que le nombre (n) d'impulsions de lumière utilisées (2 , 2", L, L1-L4, La-Lc) est réglable automatiquement, en particulier à l'aide d'au moins une valeur seuil absolue ou relative définie (Zb, 6) pour la valeur de mesure spécifique à l'objet cible (Z, Z', M1-M3, $I_{ges}$), de telle manière qu'il existe au moins une première zone de balayage avec un nombre (n) accru en comparaison avec une seconde zone de balayage, en particulier cependant que la valeur de mesure est une valeur de distance (Z, Z', M1-M3) en dessous d'une distance maximale (Zb).

4. Appareil de mesure (90) selon la revendication 3, **caractérisé en ce que** l'unité de commande et d'évaluation est configurée de telle manière qu'au moins pour la première zone de balayage la mesure d'une valeur de distance respective (Z, Z', M1-M3) se base sur un calcul de moyenne sur un nombre n>=2 d'impulsions de lumière utilisées (2 , 2", L, L1-L4, La-Lc), soit au moyen

    • du principe du calcul de moyenne glissante si bien que le nombre des points de balayage (P, P', P1', P2', P1-P7) est indépendant du nombre réglé d'impulsions de lumière utilisées (2 , 2", L, L1-L4, La-Lc) ou
    • d'un calcul de moyenne qui réduit le nombre des points de balayage (P, P', P1', P2', P1-P7).

5. Appareil de mesure (90) selon l'une des revendications précédentes, **caractérisé en ce que** le réglage automatique du nombre (n) se fait **en ce que** le détecteur et l'unité de commande et d'évaluation sont configurés pour la totalisation de la somme côté détecteur d'un nombre n>=1 d'impulsions de lumière successives détectées (2, 2", L, L1-L4, La-Lc) pour une impulsion totale résultante (G, G1-G3, G1', G2') et pour la mesure d'une valeur de distance (Z, Z', M1-M3) vers l'objet cible (100, 100') par application du principe du temps de vol sur l'impulsion totale résultante (G, G1-G3, G1', G2').

6. Appareil de mesure (90) selon la revendication 5, **caractérisé en ce que** la totalisation se fait jusqu'à ce que l'impulsion totale résultante (G, G1-G3, G1', G2') remplit un critère d'interruption prédéfini, lié à la valeur de mesure spécifique à l'objet cible (Z, Z', M1-M3, $I_{ges}$), en particulier cependant que

    • le critère d'interruption est une valeur de seuil d'intensité du signal (6) à dépasser, en particulier qui est en fonction du bruit du fond, et/ou
    • le critère d'interruption est un seuil d'erreur maximal (8) de la valeur de distance (Z, Z', M1-M3) à sous-dépasser mesurée sur la base de l'impulsion totale résultant (G, G1-G3, G1', G2') et/ou
    • la valeur de mesure spécifique à l'objet cible est une valeur de distance (Z, Z', M1-M3) avec l'objet cible (100, 100') et le critère d'interruption est un changement brusque de la valeur de distance (Z, Z', M1-M3).

7. Appareil de mesure (90) selon la revendication 5 ou 6, **caractérisé en ce que**, partant de différentes impulsions de démarrage (La, Lb, Lc) plusieurs opérations de totalisation d'un nombre respectif d'impulsions de lumière successives détectées (2 , 2", L, L1-L4, La-Lc) sont effectuées parallèlement.

8. Appareil de mesure (90) selon l'une des revendications 1 à 7, **caractérisé en ce que** la valeur de mesure spécifique à l'objet cible (Z, Z', M1-M3, $I_{ges}$) est valeur de distance (Z, Z', M1-M3) avec l'objet cible (100, 100') qui a été déterminée par une mesure précédente basée sur les impulsions de lumière, en particulier cependant que la valeur de distance (Z, Z', M1-M3) d'une des lignes de balayage précédentes qui correspond à la direction d'émission voisine de la direction d'émission (1) respectivement présente est utilisée lors du balayage scannant ligne par ligne.

9. Appareil de mesure (90) selon l'une des revendications 1 à 7, **caractérisé en ce que** l'appareil de mesure (90) présente un télémètre de mesure approximative pour la détermination d'une valeur de distance approximative d'un objet cible (100, 100') et que l'unité de commande et d'évaluation est configurée pour le réglage automatique du nombre (n) en fonction d'une valeur de distance mesurée par le télémètre de mesure approximative comme valeur de mesure spécifique à l'objet cible (Z, Z', M1-M3), en particulier cependant que le télémètre de mesure approximative est configuré comme :

    • une caméra RIM,
    • un télémètre électronique,

- une caméra stéréo,
- une caméra à champ lumineux ou
- une caméra pour la détermination de la distance par traitement d'images.

**10.** Appareil de mesure (90) selon l'une des revendications 8 ou 9, **caractérisé en ce que** l'unité de commande et d'évaluation est configurée pour l'augmentation automatique du nombre (n) d'impulsions de lumière utilisées (2 , 2", L, L1-L4, La-Lc) et pour la réduction qui lui est associée et qui est coordonnée à celle-ci de la puissance du faisceau de mesure émis (91) pour des valeurs de distance (Z, Z', M1-M3) en dessous d'une valeur de distance limite définie par comparaison avec les valeurs de distance (Z, Z', M1-M3) au-dessus de la valeur de distance limite, en particulier cependant qu'il s'agit, pour la valeur de distance limite, de la distance nominale de risque oculaire.

**11.** Appareil de mesure (90) selon l'une des revendications 8 à 10, **caractérisé en ce que** l'unité de commande et d'évaluation est configurée pour le réglage automatique du nombre (n) de telle manière que la grille de balayage (3) est formée adaptée au rayon effectif (R) du faisceau de mesure (91), cependant qu'il est tenu compte d'une dépendance de distance du rayon effectif (R), en particulier cependant que le réglage automatique du nombre (n) est effectué de telle manière que la distance entre des points de balayage successifs (P, P', P1', P2', P1-7) correspond au rayon effectif (R) du faisceau de mesure (91) ou à une fraction ou un multiple sélectionnable du rayon effectif (R) du faisceau de mesure (91), tout au moins pour des points de balayage (P, P', P1', P2', P1-7) dont la valeur de distance associée (Z, Z', M1-M3) n'est pas supérieure à une valeur de distance maximale.

**12.** Appareil de mesure (90) selon une des revendications précédentes, **caractérisée en ce que** l'unité de commande et d'évaluation est configurée pour

- le réglage automatique du taux d'émission d'impulsions laser en fonction d'une valeur de mesure spécifique à l'objet cible (Z, Z', M1-M3, I$_{ges}$), détectée en temps réel par l'appareil de mesure (90), en particulier d'une valeur de distance (Z, Z', M1-M3), en particulier que l'unité de commande et d'évaluation est configurée pour identifier simultanément plusieurs impulsions de lumière (2 , 2", L, L1-L4, La-Lc) dans l'air et les traiter et/ou
- la sortie d'une note pour l'utilisateur sur un affichage d'utilisateur, cependant que la note pour l'utilisateur indique si une grille de balayage souhaitée (3) peut être formée pour des paramètres de mesure présents, en particulier le taux d'émission d'impulsions de lumière, la vitesse de la variation de la direction d'émission et/ou la portée de mesure.

**13.** Appareil de mesure (90) selon la revendication 11 et 12, **caractérisé en ce que** l'unité de commande et d'évaluation est configurée pour le réglage automatique du taux d'émission d'impulsions laser accordé au réglage du nombre (n) d'impulsions de lumière utilisées (2 , 2", L, L1-L4, La-Lc) de telle manière que la distance dépendant du rayon du faisceau de mesure (D) de points de balayage successifs (2 , 2", L, L1-L4, La-Lc) est garantie indépendamment de la distance.

**14.** Procédé de mesure optoélectronique pour le balayage optique d'un objet cible (100, 100') avec

- émission d'un faisceau de mesure pulsé (91) sur l'objet cible à balayer (100, 100') avec variation de la direction d'émission des impulsions de lumière (2 , 2", L, L1-L4, La-Lc) autour d'au moins un axe (a1, a2), en particulier de deux axes perpendiculaires l'un à l'autre, de telle manière qu'un balayage scannant de l'objet cible (100, 100') peut être exécuté, cependant qu'une grille de balayage (3) est formée de points de balayage (P, P', P1', P2', P1-P7),
- mesure de la direction d'émission (1),
- détection d'impulsions de lumière (2 , 2", L, L1-L4, La-Lc) réfléchies par l'objet cible (100, 100') et
- mesure d'une valeur de distance (Z, Z', M1-M3) vers un point de balayage respectif (P, P', P1', P2', P1-P7) de l'objet cible (100, 100') selon le principe du temps de vol, cependant qu'un nombre n>=1 d'impulsions de lumière détectées (2 , 2", L, L1-L4, La-Lc) est utilisé pour la mesure, et un réglage automatique du nombre (n) des impulsions de lumière (2 , 2", L, L1-L4, La-Lc) utilisées pour la mesure dépendent d'une valeur de mesure spécifique à l'objet cible (Z, Z', M1-M3, I$_{ges}$), détectée en temps réel,

**caractérisé en ce que** le nombre (n) est adapté automatiquement, de manière flexible et en temps réel à la situation de mesure à l'aide de la valeur de mesure actuelle (Z, Z', M1-M3, I$_{ges}$).

**15.** Produit programme d'ordinateur qui est mémorisé sur un support lisible par machine ou signal de données informatiques, concrétisé par une onde électromagnétique, avec un code de programme, pour la commande et l'exécution du procédé selon la revendication 14, lorsque le programme est exécuté dans une unité de commande et d'évaluation d'un appareil de mesure (90) selon la revendication 1.

Fig 1

Fig 2a

## Fig 2b

## Fig 3

Fig 4a

Fig 4b

Fig 5a

Fig 5b

I

n=1

9

8

L1

5

Iges

## Fig 6a

I

n=2

8

L1+L2

5

Iges

## Fig 6b

I

n=3

6

L1+L2+L3

8

5

Iges

## Fig 6c

I

n=4

8

6

L1+L2+L3+L4=G

5

7

Iges

## Fig 6d

Fig 7a

Fig 7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3118651 A1

- EP 2787320 A1